(19) Europäisches Patentamt
European Patent Office
Office européen des brevets

(11) **EP 4 593 442 A1**

(12) **EUROPEAN PATENT APPLICATION**
published in accordance with Art. 153(4) EPC

(43) Date of publication:
**30.07.2025 Bulletin 2025/31**

(21) Application number: **23856492.6**

(22) Date of filing: **12.08.2023**

(51) International Patent Classification (IPC):
***H04W 16/10*** (2009.01)

(52) Cooperative Patent Classification (CPC):
**H04W 16/10**

(86) International application number:
**PCT/CN2023/112783**

(87) International publication number:
**WO 2024/041402 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 CN 202211024817**

(71) Applicant: **SHANGHAI LANGBO
COMMUNICATION TECHNOLOGY
COMPANY LIMITED
Shanghai 200240 (CN)**

(72) Inventors:
• **LIU, Zheng
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND DEVICE USED IN NODE FOR WIRELESS COMMUNICATION**

(57) Disclosed in the present application are a method and device used in a node for wireless communication. A node receives a first information block; the node receives a first PDCCH, a DCI format used by the first PDCCH at least comprising a first domain; the node sends a first PUSCH, a waveform used by the first PUSCH being a target waveform, and the target waveform being one of DFT-s-OFDM and CP-OFDM; wherein the first domain is a domain related to a waveform, and whether the DCI format used by the first PDCCH comprises a second domain depends on a second information block; when the DCI format used by the first PDCCH comprises the second domain, the second domain comprised in the DCI format used by the first PDCCH is used for determining the target waveform from the DFT-s-OFDM and the CP-OFDM; and when the DCI format used by the first PDCCH does not comprise the second domain, at least the first information block among the first information block and the second information block is used for determining the target waveform from the DFT-s-OFDM and the CP-OFDM. The present application enhances the coverage performance.

FIG. 1

EP 4 593 442 A1

**Description**

**Technical Field**

The present application relates to a transmission method and apparatus in a wireless communication system, and in particular, to an uplink transmission solution and apparatus in wireless communication.

**Related Art**

Application scenarios of a future wireless communication system are increasingly diversified, and different application scenarios impose varying performance requirements on the system. To satisfy different performance demands of various application scenarios, a new radio (NR, New Radio) (or 5G) was intended to be researched at a 3GPP (3rd Generation Partner Project) RAN (Radio Access Network) #72 Plenary Session, and a WI (Work Item) of the new radio (NR, New Radio) was approved at a 3GPP RAN #75 Plenary Session, to start to standardize the NR.

Both a CP-OFDM (Cyclic Prefix-Orthogonal Frequency Division Multiplexing) waveform and a DFT-s-OFDM (Discrete Fourier Transform-Spread-Orthogonal Frequency Division Multiplexing) waveform are supported in an uplink transmission of the new radio. The two waveforms may satisfy different application demands for different application scenarios.

**SUMMARY**

In R17 and previous releases of 5G NR (New Radio), an uplink transmission waveform is mainly configured in a semi-persistent manner. In R18, dynamic configuration of the uplink transmission waveform is intended to be supported.

The present application discloses a solution for a problem faced in a dynamic configuration process of the uplink transmission waveform. It should be noted that in the description of the present application, a dynamic waveform configuration is merely used as a typical application scenario or example. The present application is also applicable to other scenarios (for example, other scenarios of a dynamic change of a coverage situation or a high-speed movement, including, but not limited to, a capacity enhancement system, a system using a higher frequency, a coverage enhancement system, unlicensed frequency domain communication, IoT (Internet of Things), a URLLC (Ultra Reliable Low Latency Communication) network, and Internet of Vehicles) that face a similar problem, and may also achieve a similar technical effect. In addition, a unified solution in different scenarios (including but not limited to a multi-carrier scenario) further helps to reduce hardware complexity and costs. Without conflicts, an embodiment in a first node device of the present application and features in this embodiment may be applied to a second node device, and vice versa. In particular, for explanations (if not especially described) of terminology (Terminology), nouns, functions, and variables in the present application, reference may be made to definitions in a TS36 series, a TS37 series, and a TS38 series of 3GPP specification protocols.

The present application discloses a method in a first node used in wireless communication. The method includes:

receiving a first information block;

receiving a first PDCCH, a DCI format used by the first PDCCH at least including a first domain; and

sending a first PUSCH, a waveform used by the first PUSCH being a target waveform, and the target waveform being one of DFT-s-OFDM and CP-OFDM.

The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the target waveform is determined based on whether the DCI format used by the first PDCCH includes the second domain, to provide a back-off mechanism for dynamic waveform conversion, thereby improving performance.

As an embodiment, the target waveform is determined from the DFT-s-OFDM or the CP-OFDM by using at least the first information block between the first information block and the second information block, thereby simplifying a design of the dynamic waveform conversion.

According to an aspect of the present application, the foregoing method is characterized in that the second information block is a domain, a value of the second information block is an enumerated value, and the target waveform is related to whether the second information block is configured.

As an embodiment, the target waveform is related to whether the second information block is configured, thereby simplifying the design, and avoiding fuzziness of a back-off path.

According to an aspect of the present application, the foregoing method is characterized by including: receiving a third information block.

The first information block is used for indicating a first reference waveform, the third information block is used for indicating a second reference waveform, the first reference waveform is one of the DFT-s-OFDM and the CP-OFDM, and the second reference waveform is one of the DFT-s-OFDM and the CP-OFDM. When the second information block is not configured, the target waveform is the second reference waveform. When the second information block is configured and the DCI format used by the first PDCCH does not include the second domain, the target waveform is the first reference waveform.

As an embodiment, a back-off waveform is determined based on whether the second information block is configured and whether the first PDCCH includes the second domain, thereby ensuring backward compatibility and optimizing system performance.

According to an aspect of the present application, the foregoing method is characterized in that a transmitted power of the first PUSCH is equal to a smaller value between a first upper limit value and a first power value, a first parameter value is used for determining the first upper limit value, and a second parameter value is used for determining the first power value. The first parameter value is related to the target waveform, and the second parameter value is related to the target waveform.

As an embodiment, power parameters are adjusted according to a waveform, thereby improving uplink transmission performance.

According to an aspect of the present application, the foregoing method is characterized in that a size of the first domain included in the DCI format used by the first PDCCH is equal to a larger size between a size of the first domain corresponding to the DFT-s-OFDM and a size of the first domain corresponding to the CP-OFDM.

As an embodiment, the size of the first domain included in the DCI format used by the first PDCCH is equal to a size of larger first domains corresponding to different waveforms, thereby ensuring correct reception of the DCI format.

According to an aspect of the present application, the foregoing method is characterized in that the size of the first domain corresponding to the DFT-s-OFDM is not equal to the size of the first domain corresponding to the CP-OFDM. At least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

As an embodiment, at least one most significant bit equal to "0" is added to the first domain having a smaller size, thereby achieving consistency between a base station and a user equipment in understanding of bits in the DCI format.

According to an aspect of the present application, the foregoing method is characterized in that the DCI format used by the first PDCCH is used for scheduling the first PUSCH. An earliest time domain symbol occupied by the first PUSCH is not earlier than a reference time domain symbol, the reference time domain symbol being a next uplink symbol of which a start time is later than an expiration time of the first PDCCH by a first time length. The first time length is related to the target waveform.

As an embodiment, a processing delay is related to the target waveform, thereby reducing implementation complexity.

The present application discloses a method in a second node used in wireless communication. The method includes:

sending a first information block;

sending a first PDCCH, a DCI format used by the first PDCCH at least including a first domain; and

receiving a first PUSCH, a waveform used by the first PUSCH being a target waveform, and the target waveform being one of DFT-s-OFDM and CP-OFDM.

The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

According to an aspect of the present application, the foregoing method is characterized in that the second information block is a domain, a value of the second information block is an enumerated value, and the target waveform is related to whether the second information block is configured.

According to an aspect of the present application, the foregoing method is characterized by including: sending a third information block.

The first information block is used for indicating a first reference waveform, the third information block is used for indicating a second reference waveform, the first reference waveform is one of the DFT-s-OFDM and the CP-OFDM, and the second reference waveform is one of the DFT-s-OFDM and the CP-OFDM. When the second information block is not configured, the target waveform is the second reference waveform. When the second information block is configured and the DCI format used by the first PDCCH does not include the second domain, the target waveform is the first reference waveform.

According to an aspect of the present application, the foregoing method is characterized in that a transmitted power of the first PUSCH is equal to a smaller value between a first upper limit value and a first power value, a first parameter value is used for determining the first upper limit value, and a second parameter value is used for determining the first power value. The first parameter value is related to the target waveform, and the second parameter value is related to the target waveform.

According to an aspect of the present application, the foregoing method is characterized in that a size of the first domain included in the DCI format used by the first PDCCH is equal to a larger size between a size of the first domain corresponding to the DFT-s-OFDM and a size of the first domain corresponding to the CP-OFDM.

According to an aspect of the present application, the foregoing method is characterized in that the size of the first domain corresponding to the DFT-s-OFDM is not equal to the size of the first domain corresponding to the CP-OFDM. At least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

According to an aspect of the present application, the foregoing method is characterized in that the DCI format used by the first PDCCH is used for scheduling the first PUSCH. An earliest time domain symbol occupied by the first PUSCH is not earlier than a reference time domain symbol, the reference time domain symbol being a next uplink symbol of which a start time is later than an expiration time of the first PDCCH by a first time length. The first time length is related to the target waveform.

The present application discloses a first node device used in wireless communication. The first node device includes:

a first receiver, configured to receive a first information block;

a second receiver, configured to receive a first PDCCH, a DCI format used by the first PDCCH at least including a first domain; and

a first transmitter, configured to send a first PUSCH, a waveform used by the first PUSCH being a target waveform, and the target waveform being one of DFT-s-OFDM and CP-OFDM.

The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

The present application discloses a second node device used in wireless communication. The second node device includes:

a second transmitter, configured to send a first information block;

a third transmitter, configured to send a first PDCCH, a DCI format used by the first PDCCH at least including a first domain; and

a third receiver, configured to receive a first PUSCH, a waveform used by the first PUSCH being a target waveform, and the target waveform being one of DFT-s-OFDM and CP-OFDM.

The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

## BRIEF DESCRIPTION OF THE DRAWINGS

Other features, objectives, and advantages of the present application will become clearer by reading detailed descriptions of non-restrictive embodiments with reference to the following accompanying drawings.

FIG. 1 shows a flowchart of a first information block, a first PDCCH, and a first PUSCH according to an embodiment of the present application;

FIG. 2 shows a schematic diagram of a network architecture according to an embodiment of the present application;

FIG. 3 shows a schematic diagram of a radio protocol architecture of a user plane and a control plane according to an embodiment of the present application;

FIG. 4 shows a schematic diagram of a first node device and a second node device according to an embodiment of the present application;

FIG. 5 shows a transmission flowchart of a wireless signal according to an embodiment of the present application;

FIG. 6 shows a transmission flowchart of a wireless signal according to another embodiment of the present application;

FIG. 7 shows a transmission flowchart of a wireless signal according to another embodiment of the present application;

FIG. 8 shows a schematic diagram of a second information block according to an embodiment of the present application;

FIG. 9 shows a schematic diagram of a target waveform according to an embodiment of the present application;

FIG. 10 shows a schematic diagram of a transmitted power of a first PUSCH according to an embodiment of the present application;

FIG. 11 shows a schematic diagram of a size of a first domain according to an embodiment of the present application;

FIG. 12 shows a schematic diagram of an added bit according to an embodiment of the present application;

FIG. 13 shows a schematic diagram of a first time length according to an embodiment of the present application;

FIG. 14 shows a structural block diagram of a processing apparatus in a first node device according to an embodiment of the present application; and

FIG. 15 shows a structural block diagram of a processing apparatus in a second node device according to an embodiment of the present application.

## DETAILED DESCRIPTION

The following further describes the technical solutions of the present application in detail with reference to the accompanying drawings. It should be noted that the embodiments of the present application and features in the embodiments may be randomly combined with each other without conflicts.

## Embodiment 1

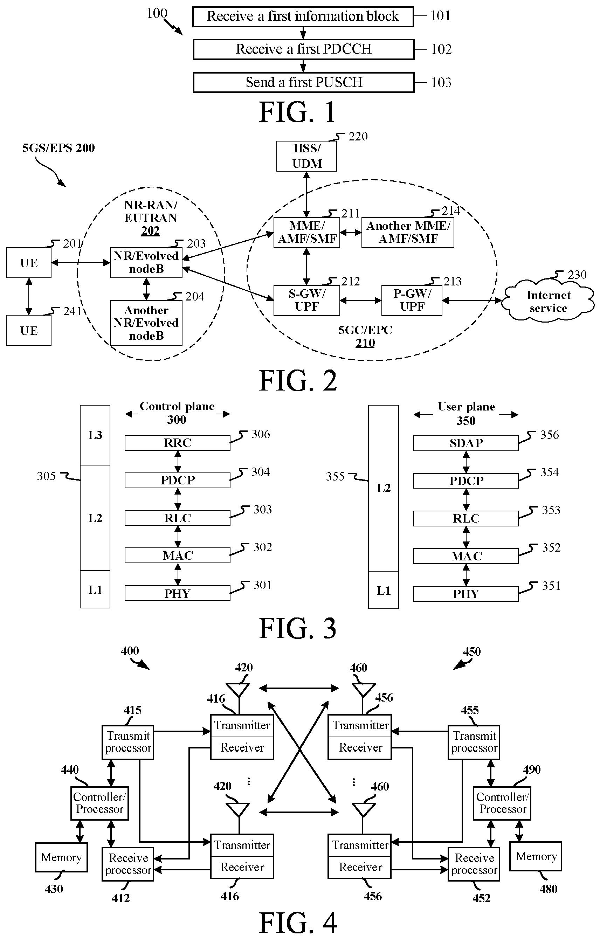

Embodiment 1 exemplarily shows a flowchart 100 of a first information block, a first PDCCH, and a first PUSCH according to an embodiment of the present application, as shown in FIG. 1. In FIG. 1, each box represents a step. It should be particularly noted that a sequence of the boxes in the figure is merely an example, and does not limit a time sequence between the represented steps.

In Embodiment 1, a first node device in the present application receives a first information block in step 101. The first node device in the present application receives a first PDCCH in step 102. A DCI format used by the first PDCCH at least includes a first domain. The first node device in the present application sends a first PUSCH in step 103. A waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the first information block is transmitted via an air interface or a radio interface.

As an embodiment, the first information block includes an entire or partial high layer signaling or physical layer signaling.

As an embodiment, the first information block includes an entire or partial RRC (Radio Resource Control) layer signaling. Alternatively, the first information block includes an entire or partial MAC (Medium Access Control) layer signaling.

As an embodiment, the first information block includes an entire or partial system information block (SIB, System Information Block).

As an embodiment, the first information block includes an entire or partial SIB1.

As an embodiment, the first information block is user equipment-specific (UE-specific).

As an embodiment, the first information block is configured per carrier (carrier). Alternatively, the first information block is configured per BWP (bandwidth part). Alternatively, the first information block is configured per band (band) or per frequency range (FR, Frequency Range).

As an embodiment, the first information block includes all or some domains in a DCI (Downlink Control Information) format.

As an embodiment, the first information block includes an entire or partial IE (Information Element) "PUSCH-Config". Alternatively, the first information block includes an entire or partial IE "BWP-UplinkDedicated". Alternatively, the first information block includes an entire or partial IE "BWP-Uplink". Alternatively, the first information block includes an entire or partial IE "ServingCellConfig". Alternatively, the first information block includes an entire or partial IE "Uplink-Config".

As an embodiment, the first information block includes an entire or partial IE "RACH-ConfigCommon". Alternatively, the first information block includes an entire or partial IE "BWP-UplinkCommon".

As an embodiment, the first information block includes an entire or partial IE "ConfiguredGrantConfig".

As an embodiment, the first information block includes an entire or partial IE "PUSCH-ConfigCommon".

As an embodiment, the first information block includes a higher layer parameter "msg3-transformPrecoder".

As an embodiment, the first information block includes a higher layer parameter "msgA-TransformPrecoder".

As an embodiment, the first information block includes a higher layer parameter "transformPrecoder".

As an embodiment, the first information block includes a higher layer parameter "msg3-transformPrecoder". Therefore, when a dynamically enabled/disabled transform precoder is turned off or the second information block is not configured, a random access waveform configuration may be directly backed off, thereby simplifying a back-off procedure and reducing implementation complexity.

As an embodiment, the first information block includes a higher layer parameter "transformPrecoder". Therefore, when the dynamically enabled/disabled transform precoder is turned off or the second information block is not configured, a waveform configuration specific to a user equipment may be backed off, thereby optimizing coverage performance during back-off.

As an embodiment, the first information block includes entire or partial PUSCH configuration information.

As an embodiment, the first information block includes entire or partial random access configuration information.

As an embodiment, when the second information block is configured, the second information block is transmitted via an air interface or a radio interface.

As an embodiment, the first receiver receives the second information block.

As an embodiment, the first transmitter sends the second information block.

As an embodiment, the second information block is transmitted over a PUSCH (physical uplink shared channel).

As an embodiment, the second information block includes a capability (capability) parameter of the first node device.

As an embodiment, the second information block is used for indicating at least one capability (capability) parameter of the first node device.

As an embodiment, whether the DCI format used by the first PDCCH includes the second domain is related to at least one capability (capability) parameter of a sender of the first PUSCH.

As an embodiment, at least one capability (capability) parameter of the sender of the first PUSCH is used for determining that the DCI format used by the first PDCCH includes the second domain.

As an embodiment, at least one capability (capability) parameter of the sender of the first PUSCH is used for determining whether dynamic enabling/disabling of transform precoding (or transform precoder) is supported. That the DCI format used by the first PDCCH includes the second domain is equivalent to that the dynamic enabling/disabling of transform precoding (or transform precoder) is supported.

As an embodiment, at least one capability (capability) parameter of the sender of the first PUSCH is used for determining whether dynamic switching of an uplink transmission waveform is supported. That the DCI format used by the first PDCCH includes the second domain is equivalent to that the dynamic switching of the uplink transmission waveform is supported.

As an embodiment, the first transmitter sends a fourth information block. The fourth information block is used for explicitly or implicitly indicating at least one capability (capability) parameter of the first node device. The at least one capability (capability) parameter of the first node device is used for indicating whether the first node device supports that the DCI format used by the first PDCCH includes the second domain.

As an embodiment, the first transmitter sends a fourth information block. The fourth information block is used for explicitly or implicitly indicating at least one capability (capability) parameter of the first node device. The at least one capability (capability) parameter of the first node device is used for indicating whether the first node device supports the dynamic switching of the uplink transmission waveform.

As an embodiment, the first transmitter sends a fourth information block. The fourth information block is used for explicitly or implicitly indicating at least one capability (capability) parameter of the first node device. The at least one capability (capability) parameter of the first node device is used for indicating whether the first node device supports the dynamic enabling/disabling of transform precoding (or transform precoder).

As an embodiment, at least one capability (capability) parameter of the sender of the first PUSCH is used for determining whether dynamic enabling/disabling of transform precoding (or transform precoder) is supported. That the DCI format used by the first PDCCH includes the second domain is equivalent to that the dynamic enabling/disabling of transform precoding (or transform precoder) is supported.

As an embodiment, at least one capability (capability) parameter of the sender of the first PUSCH is used for determining whether dynamic switching of an uplink transmission waveform is supported. That the DCI format used by the first PDCCH includes the second domain is equivalent to that the dynamic switching of the uplink transmission waveform is supported.

As an embodiment, the second information block includes an entire or partial high layer signaling or physical layer signaling.

As an embodiment, the second information block includes an entire or partial RRC (Radio Resource Control) layer signaling. Alternatively, the second information block includes an entire or partial MAC (Medium Access Control) layer signaling.

As an embodiment, the second information block includes an entire or partial system information block (SIB, System Information Block).

As an embodiment, the second information block is user equipment-specific (UE-specific).

As an embodiment, the second information block is configured per carrier (carrier). Alternatively, the second information block is configured per BWP (bandwidth part). Alternatively, the second information block is configured per band (band) or per frequency range (FR, Frequency Range).

As an embodiment, the second information block includes all or some domains in a DCI (Downlink Control Information) format.

As an embodiment, the second information block includes an entire or partial IE "PUSCH-Config". Alternatively, the second information block includes an entire or partial IE "BWP-UplinkDedicated". Alternatively, the second information block includes an entire or partial IE "BWP-Uplink". Alternatively, the second information block includes an entire or partial IE "ServingCellConfig". Alternatively, the second information block includes an entire or partial IE "UplinkConfig".

As an embodiment, the second information block includes an entire or partial IE "ConfiguredGrantConfig".

As an embodiment, the second information block includes an entire or partial IE "PUSCH-ConfigCommon".

As an embodiment, the second information block includes an entire or partial IE "pdcch-ConfigCommon". Alternatively, the second information block includes an entire or partial IE "BWP-DownlinkCommon". Alternatively, the second information block includes an entire or partial IE "BWP-DownlinkDedicated". Alternatively, the second information block includes an entire or partial IE "pdcch-Config". Alternatively, the second information block includes an entire or partial IE "SearchSpace". Alternatively, the second information block includes an entire or partial IE "SearchSpaceExt-v1800". Alternatively, the second information block includes an entire or partial IE "SearchSpaceExt2-r18".

As an embodiment, the first information block and the second information block are two different domains or two different sub-IEs in a same IE.

As an embodiment, the first information block and the second information block are respectively two different IEs.

As an embodiment, the first information block and the second information block are transmitted over a same PDSCH.

As an embodiment, the first information block and the second information block are respectively transmitted over two different PDSCHs.

As an embodiment, the first information block is earlier than the second information block.

As an embodiment, the first information block is later than the second information block.

As an embodiment, the first PDCCH is transmitted via an air interface or a radio interface.

As an embodiment, the first PDCCH occupies one PDCCH candidate (candidate).

As an embodiment, the first PDCCH is transmitted in a common search space (CSS, common search space).

As an embodiment, the first PDCCH is transmitted in a user equipment specific search space (USS, UE specific search space).

As an embodiment, the first PDCCH is a baseband signal or a radio frequency signal of a PDCCH (physical downlink control channel).

As an embodiment, the first PDCCH is used for carrying DCI.

As an embodiment, a CRC of the first PDCCH is scrambled by an RNTI (Radio Network Temporary Identity).

As an embodiment, the CRC of the first PDCCH is scrambled by a C-RNTI.

As an embodiment, the CRC of the first PDCCH is scrambled by the C-RNTI or an MCS-RNTI.

As an embodiment, the CRC of the first PDCCH is scrambled by the C-RNTI, the MCS-RNTI, or an SP-CSI-RNTI.

As an embodiment, the CRC of the first PDCCH is scrambled by a CS-RNTI, the C-RNTI, the MCS-RNTI, or the SP-CSI-RNTI.

As an embodiment, the DCI format used by the first PDCCH is a DCI format used by DCI carried in the first PDCCH.

As an embodiment, the DCI format used by the first PDCCH is a DCI format used for generating the first PDCCH.

As an embodiment, the DCI format used by the first PDCCH is a DCI format used for monitoring (monitor) a PDCCH candidate occupied by the first PDCCH.

As an embodiment, the DCI format used by the first PDCCH is a DCI format used when the first PDCCH is decoded.

As an embodiment, the DCI format used by the first PDCCH is a DCI format corresponding to an information bit used for generating the first PDCCH.

As an embodiment, the DCI format used by the first PDCCH is a DCI format transmitted over the first PDCCH.

As an embodiment, the DCI format used by the first PDCCH is a DCI format other than DCI format 0_0.

As an embodiment, the DCI format used by the first PDCCH is a DCI format other than DCI format 0_0 or DCI format 1_0.

As an embodiment, the DCI format (Format) used by the first PDCCH is 0_1. Alternatively, the DCI format used by the first PDCCH is 0_2. Alternatively, the DCI format used by the first PDCCH is 0_K. Alternatively, the DCI format used by the first PDCCH is one of 0_2 and 0_K. Alternatively, the DCI format used by the first PDCCH is one of 0_1, 0_2, and 0_K. Alternatively, the DCI format used by the first PDCCH is one of 0_1 and 0_2. Alternatively, the DCI format used by the first PDCCH is one of 0_1 and 0_K. K is a positive integer greater than 2. As an auxiliary embodiment of the foregoing embodiment, K is equal to 3. As an auxiliary embodiment of the foregoing embodiment, K is equal to 4. As an auxiliary embodiment of the foregoing embodiment, K is equal to 5.

As an embodiment, the DCI format (Format) used by the first PDCCH is 1_1. Alternatively, the DCI format used by the first PDCCH is 1_2. Alternatively, the DCI format used by the first PDCCH is 1_K. Alternatively, the DCI format used by the first PDCCH is one of 1_2 and 1_K. Alternatively, the DCI format used by the first PDCCH is one of 1_1, 1_2, and 1_K. Alternatively, the DCI format used by the first PDCCH is one of 1_1 and 1_2. Alternatively, the DCI format used by the first PDCCH is one of 1_1 and 1_K. K is a positive integer greater than 2. As an auxiliary embodiment of the foregoing embodiment, K is equal to 3. As an auxiliary embodiment of the foregoing embodiment, K is equal to 4. As an auxiliary embodiment of the foregoing embodiment, K is equal to 5.

As an embodiment, the DCI format (Format) used by the first PDCCH is 0_1 or 1_0. Alternatively, the DCI format used by the first PDCCH is 0_2 or 1_2. Alternatively, the DCI format used by the first PDCCH is 0_K or 1_K. Alternatively, the DCI format used by the first PDCCH is one of 0_2, 0_K, 1_2, and 1_K. Alternatively, the DCI format used by the first PDCCH is one of 0_1, 0_2, 0_K, 1_1, 1_2, and 1_K. Alternatively, the DCI format used by the first PDCCH is one of 0_1, 0_2, 1_1, and 1_2. Alternatively, the DCI format used by the first PDCCH is one of 0_1, 0_K, 1_1, and 1_K. K is a positive integer greater than 2. As an auxiliary embodiment of the foregoing embodiment, K is equal to 3. As an auxiliary embodiment of the foregoing embodiment, K is equal to 4. As an auxiliary embodiment of the foregoing embodiment, K is equal to 5.

As an embodiment, a DCI format combination to which the DCI format used by the first PDCCH belongs is predefined or configured.

As an embodiment, the DCI format combination to which the DCI format used by the first PDCCH belongs is configured through a PDCCH configuration signaling.

As an embodiment, the DCI format combination to which the DCI format used by the first PDCCH belongs is configured through a search space configuration signaling.

As an embodiment, at least one DCI format configured through a configuration signaling of a search space set to which the PDCCH candidate occupied by the first PDCCH belongs includes the DCI format used by the first PDCCH.

As an embodiment, the first DCI format is 2_H, where H is a non-negative integer.

As an embodiment, the DCI format used by the first PDCCH is a DCI format for scheduling an uplink channel or signal.

As an embodiment, the DCI format used by the first PDCCH is a DCI format for scheduling a downlink channel or signal.

As an embodiment, the DCI format used by the first PDCCH is one of DCI formats supported by a user equipment-specific search space set (USS set, UE-Specific Search Set).

As an embodiment, the DCI format used by the first PDCCH is one of DCI formats supported by a common search space set (CSS set).

As an embodiment, the DCI format used by the first PDCCH is used for scheduling the first PUSCH.

As an embodiment, the DCI format used by the first PDCCH is used for scheduling a PDSCH.

As an embodiment, the DCI format used by the first PDCCH is used for scheduling a PUSCH earlier than the first PUSCH.

As an embodiment, the DCI format used by the first PDCCH is a group common (group common) DCI format.

As an embodiment, the first domain is a "Precoding information and number of layers" domain.

As an embodiment, the first domain is a "Second Precoding information" domain.

As an embodiment, the first domain is an "Antenna ports" domain.

As an embodiment, the first domain is a "PTRS-DMRS association" domain.

As an embodiment, the first domain is a "DMRS sequence initialization" domain.

As an embodiment, the first domain is related to a demodulation reference signal of the PUSCH.

As an embodiment, the first domain is used for explicitly or implicitly indicating a quantity of layers (layer) occupied by the PUSCH and a used TPMI (transmitted precoding matrix indicator).

As an embodiment, the first domain is used for explicitly or implicitly indicating a resource in a time-frequency code domain occupied by the demodulation reference signal of the PUSCH.

As an embodiment, the first domain is used for explicitly or implicitly indicating a quantity of CDM (Code Division Multiplexing) groups corresponding to the demodulation reference signal of the PUSCH and a demodulation reference signal port to which the demodulation reference signal belongs.

As an embodiment, the first domain is used for explicitly or implicitly indicating at least one of the quantity of CDM groups corresponding to the demodulation reference signal of the PUSCH, the demodulation reference signal port to which the demodulation reference signal belongs, a used scrambling sequence initial value, and a quantity of occupied front-load (front-load) time domain symbols (symbol).

As an embodiment, the first domain is used for explicitly or implicitly indicating an association (association) relationship between a phase tracking reference signal (PTRS, phase tracking reference signal) and the demodulation reference signal of the PUSCH.

As an embodiment, the first domain is used for explicitly or implicitly indicating initialization of a generation sequence of the demodulation reference signal of the PUSCH.

As an embodiment, the first domain includes at least one padding bit (padding bit).

As an embodiment, the first domain does not include any padding bit.

As an embodiment, the first domain is neither a start domain nor an end domain included in the DCI format used by the first PDCCH.

As an embodiment, the first PUSCH is a dynamically scheduled PUSCH.

As an embodiment, the first PUSCH is a configured grant (CG, configured grant) PUSCH.

As an embodiment, the first PUSCH is a configured grant (CG, configured grant) PUSCH of type 1 (type 1).

As an embodiment, the first PUSCH is a configured grant (CG, configured grant) PUSCH of type 2 (type 2).

As an embodiment, the first PUSCH carries UCI (uplink control information).

As an embodiment, the first PUSCH does not carry the UCI.

As an embodiment, the first PUSCH carries a UL-SCH (Uplink shared channel).

As an embodiment, the first PUSCH does not carry the UL-SCH.

As an embodiment, the first PUSCH is a baseband signal of the PUSCH.

As an embodiment, the first PUSCH is a radio frequency signal of the PUSCH.

As an embodiment, the technical feature that "a waveform used by the first PUSCH is a target waveform" includes the following meanings: The target waveform is used for transmission of the first PUSCH.

As an embodiment, the technical feature that "a waveform used by the first PUSCH is a target waveform" includes the following meanings: The target waveform is used for generation of a baseband signal or a radio frequency signal of the first PUSCH.

As an embodiment, the technical feature that "a waveform used by the first PUSCH is a target waveform" includes the following meanings: The first PUSCH is transmitted by using the target waveform.

As an embodiment, the technical feature that "a waveform used by the first PUSCH is a target waveform" includes the following meanings: The target waveform is a transmission waveform of the first PUSCH.

As an embodiment, the technical feature that "a waveform used by the first PUSCH is a target waveform" includes the following meanings: The transform precoding (transform precoding) or transform precoder (transform precoder) (enabled or disabled) corresponding to the target waveform is used for generating the first PUSCH.

As an embodiment, the technical feature that "a waveform used by the first PUSCH is a target waveform" includes the following meanings: A modulation symbol used for generating the first PUSCH uses the target waveform to generate the baseband signal or the radio frequency signal of the first PUSCH.

As an embodiment, the technical feature that "a waveform used by the first PUSCH is a target waveform" includes the following meanings: A type of an OFDM corresponding to the target waveform is used for generating the baseband signal or the radio frequency signal of the first PUSCH.

As an embodiment, the technical feature that "a waveform used by the first PUSCH is a target waveform" includes the following meanings: An uplink transmission waveform used by (or configured for) the sender of the first PUSCH is the target waveform.

As an embodiment, "CP-OFDM (Cyclic Prefix-Orthogonal Frequency Division Multiplexing)" and "transform precoding (or transform precoder) being disabled (disable)" are equivalent or may be used instead of each other.

As an embodiment, "DFT-s-OFDM (Discrete Fourier Transform-Spread-Orthogonal Frequency Division Multiplexing)" and "transform precoding (or transform precoder) being enabled (enable)" are equivalent or may be used instead of each other.

As an embodiment, "CP-OFDM" and "transform precoding (or transform precoder) for performing DFT spreading being disabled (disable)" are equivalent or may be used instead of each other.

As an embodiment, "DFT-s-OFDM" and "transform precoding (or transform precoder) for performing DFT spreading being enabled (enable)" are equivalent or may be used instead of each other.

As an embodiment, "a waveform used by the first PUSCH being the CP-OFDM" and "transform precoding (or transform precoder) during generation of the first PUSCH being disabled (disable)" are equivalent or may be used instead of each other.

As an embodiment, "a waveform used by the first PUSCH being the DFT-s-OFDM" and "transform precoding (or transform precoder) during generation of the first PUSCH being enabled (enable)" are equivalent or may be used instead of each other.

As an embodiment, the technical feature that "the target waveform is one of DFT-s-OFDM and CP-OFDM" includes the following meanings: Candidates of the target waveform include the DFT-s-OFDM and the CP-OFDM.

As an embodiment, the technical feature that "the target waveform is one of DFT-s-OFDM and CP-OFDM" includes the following meanings: The target waveform may be the DFT-s-OFDM or may be the CP-OFDM.

As an embodiment, the technical feature that "the target waveform is one of DFT-s-OFDM and CP-OFDM" includes the following meanings: The DFT-s-OFDM or the CP-OFDM is a candidate waveform of the target waveform.

As an embodiment, the technical feature that "the first domain is a domain related to a waveform" includes the following meanings: An explanation (or definition) of the first domain is related to the waveform.

As an embodiment, the technical feature that "the first domain is a domain related to a waveform" includes the following meanings: Information indicated by the first domain is related to the waveform.

As an embodiment, the technical feature that "the first domain is a domain related to a waveform" includes the following meanings: The explanation (or definition) of the first domain is related to enabling or disabling of transform precoding (or transform precoder).

As an embodiment, the technical feature that "the first domain is a domain related to a waveform" includes the following meanings: The explanations (or definitions) of the first domain may be different in different waveform cases.

As an embodiment, the technical feature that "the first domain is a domain related to a waveform" includes the following meanings: The explanation (or definition) of the first domain changes as the waveform changes.

As an embodiment, the technical feature that "the first domain is a domain related to a waveform" includes the following meanings: The explanation (or definition) of the first domain changes as the waveform changes.

As an embodiment, the technical feature that "the first domain is a domain related to a waveform" includes the following meanings: The size of the first domain is related to the waveform.

As an embodiment, the technical feature that "the first domain is a domain related to a waveform" includes the following meanings: A quantity of bits included in the first domain is related to the waveform.

As an embodiment, the technical feature that "the first domain is a domain related to a waveform" includes the following meanings: The size of the first domain to which no padding bit (padding bit) is added is related to the waveform.

As an embodiment, the technical feature that "the first domain is a domain related to a waveform" includes the following meanings: The size of the first domain to which no padding bit (padding bit) is added may be not equal in a case of different waveforms.

As an embodiment, the technical feature that "the first domain is a domain related to a waveform" includes the following meanings: The size of the first domain to which no padding bit (padding bit) is added is related to whether transform precoding (or transform precoder) is enabled.

As an embodiment, the technical feature that "the first domain is a domain related to a waveform" includes the following meanings: Whether transform precoding (or transform precoder) is enabled is used for determining the size of the first domain to which no padding bit (padding bit) is added.

As an embodiment, the two expressions "the first domain is a domain related to a waveform" and "the first domain is a domain related to whether transform precoding (or transform precoder) is enabled" are equivalent or may be used instead of each other.

As an embodiment, the first domain is related to the target waveform.

As an embodiment, the DCI format used by the first PDCCH includes the second domain.

As an embodiment, the DCI format used by the first PDCCH does not include the second domain.

As an embodiment, the second domain includes only one bit.

As an embodiment, the second domain includes a plurality of bits.

As an embodiment, the second domain is a domain newly introduced to release 18 (Rel 18).

As an embodiment, the second domain is an existing domain in release 17 (Rel 17) or a previous release.

As an embodiment, the second domain is a re-interpreted (re-interpret) domain among existing domains in release 17 (Rel 17) or a previous release.

As an embodiment, a definition of the second domain is related to a release.

As an embodiment, the definition of the second domain is unrelated to the release.

As an embodiment, the second domain is a "transform precoder indicator" domain.

As an embodiment, the second domain is a "waveform indicator" domain.

As an embodiment, the second domain is a "CP-OFDM/DFT-s-OFDM indicator" domain.

As an embodiment, positions of the first domain and the second domain in the DCI format used by the first PDCCH are different.

As an embodiment, the first domain and the second domain respectively include different information bits in the DCI format used by the first PDCCH.

As an embodiment, the first domain and the second domain are two domains of different types.

As an embodiment, the positions of the first domain and the second domain in the DCI format used by the first PDCCH are adjacent.

As an embodiment, the positions of the first domain and the second domain in the DCI format used by the first PDCCH are not adjacent.

As an embodiment, the technical feature that "whether the DCI format used by the first PDCCH includes the second domain depends on a second information block" includes the following meanings: The second information block is used for determining whether the DCI format used by the first PDCCH includes the second domain.

As an embodiment, the technical feature that "whether the DCI format used by the first PDCCH includes the second domain depends on a second information block" includes the following meanings: Whether the DCI format used by the first PDCCH includes the second domain depends on whether the second information block is configured.

As an embodiment, the technical feature that "whether the DCI format used by the first PDCCH includes the second domain depends on a second information block" includes the following meanings: Whether the DCI format used by the first PDCCH includes the second domain depends on whether the second information block is configured, and when the second information block is configured, whether the DCI format used by the first PDCCH includes the second domain depends on an indication of the second information block.

As an embodiment, the technical feature that "whether the DCI format used by the first PDCCH includes the second domain depends on a second information block" includes the following meanings: The second information block is used for determining the DCI format used by the first PDCCH.

As an embodiment, the technical feature that "whether the DCI format used by the first PDCCH includes the second domain depends on a second information block" includes the following meanings: The second information block is used for configuring a search space set supporting the DCI format used by the first PDCCH.

As an embodiment, all DCI formats supported by the search space set configured with the DCI format used by the first PDCCH support including the second domain.

As an embodiment, only some DCI formats among all the DCI formats supported by the search space set configured with the DCI format used by the first PDCCH support including the second domain.

As an embodiment, the technical feature that "whether the DCI format used by the first PDCCH includes the second domain depends on a second information block" includes the following meanings: All or some parts included in the second information block are used for explicitly or implicitly indicating whether the DCI format used by the first PDCCH includes the second domain.

As an embodiment, the technical feature that "whether the DCI format used by the first PDCCH includes the second domain depends on a second information block" includes the following meanings: All or some parts included in the second information block are used for explicitly or implicitly indicating whether to dynamically convert an uplink waveform, and whether to dynamically convert an uplink waveform is used for determining whether the DCI format used by the first PDCCH includes the second domain.

As an embodiment, the technical feature that "whether the DCI format used by the first PDCCH includes the second domain depends on a second information block" includes the following meanings: All or some parts included in the second information block are used for explicitly or implicitly indicating whether to dynamically enable/disable (enable/-disable or on/off) transform precoding (or transform precoder), and whether to dynamically enable/disable transform precoding (or transform precoder) is used for determining whether the DCI format used by the first PDCCH includes the second domain.

As an embodiment, the technical feature that "whether the DCI format used by the first PDCCH includes the second domain depends on a second information block" includes the following meanings: A feature domain is a domain included in the second information block. When a value of the feature domain included in the second information block is equal to a value (or a state), the DCI format used by the first PDCCH includes the second domain. When the value of the feature domain included in the second information block is equal to another value (or another state), the DCI format used by the first PDCCH does not include the second domain.

As an embodiment, the technical feature that "whether the DCI format used by the first PDCCH includes the second domain depends on a second information block" includes the following meanings: Whether the second information block is configured or provided (provided) is used for determining whether the DCI format used by the first PDCCH includes the second domain.

As an embodiment, the technical feature that "whether the DCI format used by the first PDCCH includes the second domain depends on a second information block" includes the following meanings: When the second information block is configured or provided (provided), the DCI format used by the first PDCCH includes the second domain. When the second information block is not configured or not provided (provided), the DCI format used by the first PDCCH does not include the second domain.

As an embodiment, the technical feature that "whether the DCI format used by the first PDCCH includes the second domain depends on a second information block" includes the following meanings: When the second information block is configured or provided (provided), the DCI format used by the first PDCCH does not include the second domain. When the second information block is not configured or not provided (provided), the DCI format used by the first PDCCH includes the second domain.

As an embodiment, the technical feature that "whether the DCI format used by the first PDCCH includes the second domain depends on a second information block" includes the following meanings: Whether the second information block is configured or provided (provided) is used for determining whether to dynamically enable/disable (enable/disable or on/off) transform precoding (or transform precoder), and whether to dynamically enable/disable transform precoding (or transform precoder) is used for determining whether the DCI format used by the first PDCCH includes the second domain.

As an embodiment, the technical feature that "whether the DCI format used by the first PDCCH includes the second domain depends on a second information block" includes the following meanings: Whether the second information block is configured or provided (provided) is used for determining whether to dynamically convert an uplink waveform, and whether to dynamically convert an uplink waveform is used for determining whether the DCI format used by the first PDCCH includes the second domain.

As an embodiment, the technical feature that "whether the DCI format used by the first PDCCH includes the second domain depends on a second information block" includes the following meanings: Whether the second information block is configured and a value of a parameter included in the second information block when the second information block is configured is used for determining whether the DCI format used by the first PDCCH includes the second domain.

As an embodiment, the technical feature that "whether the DCI format used by the first PDCCH includes the second domain depends on a second information block" includes the following meanings: Whether the second information block is configured and a value of a parameter included in the second information block when the second information block is configured is used for determining whether to dynamically enable/disable (enable/disable or on/off) transform precoding (or transform precoder), and whether to dynamically enable/disable transform precoding (or transform precoder) is used for determining whether the DCI format used by the first PDCCH includes the second domain.

As an embodiment, the technical feature that "whether the DCI format used by the first PDCCH includes the second domain depends on a second information block" includes the following meanings: Whether the second information block is configured and a value of a parameter included in the second information block when the second information block is configured is used for determining whether to dynamically convert an uplink waveform, and whether to dynamically convert an uplink waveform is used for determining whether the DCI format used by the first PDCCH includes the second domain.

As an embodiment, the technical feature that "whether the DCI format used by the first PDCCH includes the second domain depends on a second information block" includes the following meanings: A feature domain is a domain included in the second information block. When the second information block is not configured, the DCI format used by the first PDCCH does not include the second domain. When the second information block is configured and a value of the feature domain included in the second information block is equal to a value, the DCI format used by the first PDCCH includes the second domain. When the second information block is configured and the value of the feature domain included in the second information block is equal to another value, the DCI format used by the first PDCCH does not include the second domain.

As an embodiment, the technical feature that "whether the DCI format used by the first PDCCH includes the second domain depends on a second information block" includes the following meanings: When the second information block is configured and a value of a domain included in the second information block is equal to a predefined value, the DCI format used by the first PDCCH includes the second domain. Otherwise, the DCI format used by the first PDCCH does not include the second domain.

As an embodiment, the technical feature that "whether the DCI format used by the first PDCCH includes the second domain depends on a second information block" includes the following meanings: Whether a size of the second domain included in the DCI format used by the first PDCCH is equal to 0 depends on the second information block.

As an embodiment, the technical feature that "whether the DCI format used by the first PDCCH includes the second domain depends on a second information block" includes the following meanings: Whether a quantity of bits included in the second domain included in the DCI format used by the first PDCCH is equal to 0 depends on the second information block.

As an embodiment, the technical feature that "whether the DCI format used by the first PDCCH includes the second domain depends on a second information block" includes the following meanings: The second information block is used for explicitly or implicitly indicating at least one capability (capability) parameter of the first node device. The at least one capability (capability) parameter of the first node device is used for explicitly or implicitly indicating whether the DCI format used by the first PDCCH includes the second domain.

As an embodiment, the technical feature that "whether the DCI format used by the first PDCCH includes the second domain depends on a second information block" includes the following meanings: The second information block is used for explicitly or implicitly indicating at least one capability (capability) parameter of the first node device. The at least one capability (capability) parameter of the first node device is used for explicitly or implicitly indicating whether to support dynamic switching of the uplink transmission waveform. Whether to support dynamic switching of the uplink transmission waveform is used for explicitly or implicitly determining whether the DCI format used by the first PDCCH includes the second domain.

As an embodiment, the technical feature that "whether the DCI format used by the first PDCCH includes the second domain depends on a second information block" includes the following meanings: The second information block is used for explicitly or implicitly indicating at least one capability (capability) parameter of the first node device. The at least one capability (capability) parameter of the first node device is used for explicitly or implicitly indicating whether to dynamically enable/disable transform precoding (or transform precoder). Whether to dynamically enable/disable transform precoding (or transform precoder) is used for explicitly or implicitly determining whether the DCI format used by the first PDCCH includes the second domain.

As an embodiment, whether the DCI format used by the first PDCCH includes the second domain further depends on a capability of the first node device.

As an embodiment, the two expressions "whether the DCI format used by the first PDCCH includes the second domain" and "whether a size of the second domain included in the DCI format used by the first PDCCH is equal to 0" are equivalent or may be used instead of each other.

As an embodiment, the two expressions "whether the DCI format used by the first PDCCH includes the second domain" and "whether a quantity of bits included in the second domain included in the DCI format used by the first PDCCH is equal to 0" are equivalent or may be used instead of each other.

As an embodiment, the two expressions "the DCI format used by the first PDCCH includes the second domain" and "the size of the second domain included in the DCI format used by the first PDCCH is greater than 0" are equivalent or may be used instead of each other.

As an embodiment, the two expressions "the DCI format used by the first PDCCH does not include the second domain" and "the size of the second domain included in the DCI format used by the first PDCCH is equal to 0" are equivalent or may be used instead of each other.

As an embodiment, the two expressions "the second information block is provided (provided)" and "the DCI format used by the first PDCCH includes the second domain" are equivalent or may be used instead of each other.

As an embodiment, the two expressions "the second information block is configured (configured)" and "the DCI format used by the first PDCCH includes the second domain" are equivalent or may be used instead of each other.

As an embodiment, the two expressions "the second information block is not configured" and "the DCI format used by the first PDCCH does not include the second domain" are equivalent or may be used instead of each other.

As an embodiment, the two expressions "the second information block is not provided" and "the second information block is not configured" are equivalent or may be used instead of each other.

As an embodiment, the two expressions "the second information block is provided" and "the second information block is configured" are equivalent or may be used instead of each other.

As an embodiment, the two expressions "dynamic conversion of an uplink waveform (waveform)" and "dynamic enabling/disabling (enable/disable or on/off) of transform precoding (or transform precoder)" are equivalent or may be used instead of each other.

As an embodiment, the two expressions "dynamic enabling/disabling (enable/disable or on/off) of transform precoding (or transform precoder) is enabled (or supported)" and "the DCI format used by the first PDCCH includes the second domain" are equivalent or may be used instead of each other.

As an embodiment, the two expressions "dynamic enabling/disabling (enable/disable or on/off) of transform precoding (or transform precoder) is disabled (or not supported)" and "the DCI format used by the first PDCCH does not include the second domain" are equivalent or may be used instead of each other.

As an embodiment, the two expressions "dynamic conversion of an uplink waveform is enabled (or supported)" and "the DCI format used by the first PDCCH includes the second domain" are equivalent or may be used instead of each other.

As an embodiment, the two expressions "dynamic conversion of an uplink waveform is disabled (or not supported)" and "the DCI format used by the first PDCCH does not include the second domain" are equivalent or may be used instead of each other.

As an embodiment, the two expressions "a value of a parameter included in the second information block is equal to a first feature parameter value" and "the DCI format used by the first PDCCH includes the second domain" are equivalent or may be used instead of each other. The first feature parameter value is predefined or configurable.

As an embodiment, the two expressions "a value of a parameter included in the second information block is equal to a second feature parameter value" and "the DCI format used by the first PDCCH does not include the second domain" are equivalent or may be used instead of each other. The second feature parameter value is predefined or configurable.

As an embodiment, the two expressions "the second information block is configured (or provided) and a value of a parameter included in the second information block is equal to a first feature parameter value" and "the DCI format used by the first PDCCH includes the second domain" are equivalent or may be used instead of each other. The first feature parameter value is predefined or configurable.

As an embodiment, the two expressions "the second information block is not configured (or provided) or a value of a parameter included in the second information block when the second information block is configured (or provided) is equal to a second feature parameter value" and "the DCI format used by the first PDCCH does not include the second domain" are equivalent or may be used instead of each other. The second feature parameter value is predefined or configurable.

As an embodiment, the two expressions "a value of a parameter included in the second information block indicates that dynamic enabling/disabling of transform precoding (or transform precoder) is enabled (or supported)" and "the DCI format used by the first PDCCH includes the second domain" are equivalent or may be used instead of each other.

As an embodiment, the two expressions "a value of a parameter included in the second information block indicates that dynamic enabling/disabling of transform precoding (or transform precoder) is disabled (or not supported)" and "the DCI format used by the first PDCCH does not include the second domain" are equivalent or may be used instead of each other.

As an embodiment, the two expressions "a value of a parameter included in the second information block indicates that dynamic enabling/disabling of transform precoding (or transform precoder) is disabled (or not supported) or the second information block is not provided (or not configured)" and "the DCI format used by the first PDCCH does not include the second domain" are equivalent or may be used instead of each other.

As an embodiment, the two expressions "a value of a parameter included in the second information block indicates that dynamic switching of a waveform is enabled (or supported)" and "the DCI format used by the first PDCCH includes the second domain" are equivalent or may be used instead of each other.

As an embodiment, the two expressions "a value of a parameter included in the second information block indicates that dynamic switching of a waveform is disabled (or not supported)" and "the DCI format used by the first PDCCH does not include the second domain" are equivalent or may be used instead of each other.

As an embodiment, the two expressions "a value of a parameter included in the second information block indicates that dynamic switching of a waveform is disabled or the second information block is not provided (or not configured)" and "the DCI format used by the first PDCCH does not include the second domain" are equivalent or may be used instead of each other.

As an embodiment, the second information block includes a transform precoding (or transform precoder) enabling/disabling state of the first PUSCH when a transform precoding (or transform precoder) enabling/disabling parameter in a configuration signaling of a PUSCH (Physical Uplink Shared Channel) is defaulted.

As an embodiment, the technical feature that "the second domain included in the DCI format used by the first PDCCH is used for determining the target waveform from the DFT-s-OFDM and the CP-OFDM" includes the following meanings: The second domain included in the DCI format used by the first PDCCH is used by the first node device in the present application to determine the target waveform from the DFT-s-OFDM and the CP-OFDM.

As an embodiment, the technical feature that "the second domain included in the DCI format used by the first PDCCH is used for determining the target waveform from the DFT-s-OFDM and the CP-OFDM" includes the following meanings: The second domain included in the DCI format used by the first PDCCH is used for explicitly or implicitly indicating the target waveform from the DFT-s-OFDM and the CP-OFDM.

As an embodiment, the two technical features that "the second domain included in the DCI format used by the first PDCCH is used for determining the target waveform from the DFT-s-OFDM and the CP-OFDM" and "the second domain included in the DCI format used by the first PDCCH is used for explicitly or implicitly indicating whether to use transform precoding (transform precoder)" are equivalent or may be used instead of each other.

As an embodiment, the two technical features that "the second domain included in the DCI format used by the first PDCCH is used for determining the target waveform from the DFT-s-OFDM and the CP-OFDM" and "the second domain included in the DCI format used by the first PDCCH is used for explicitly or implicitly indicating enabling/disabling of transform precoding (transform precoder)" are equivalent or may be used instead of each other.

As an embodiment, the technical feature that "the second domain included in the DCI format used by the first PDCCH is used for determining the target waveform from the DFT-s-OFDM and the CP-OFDM" includes the following meanings: When the value of the second domain included in the DCI format used by the first PDCCH is equal to one value, the target waveform is the DFT-s-OFDM. When the value of the second domain included in the DCI format used by the first PDCCH is equal to another value, the target waveform is the CP-OFDM.

As an embodiment, the technical feature that "the second domain included in the DCI format used by the first PDCCH is used for determining the target waveform from the DFT-s-OFDM and the CP-OFDM" includes the following meanings: When the value of the second domain included in the DCI format used by the first PDCCH is equal to one value, transform precoding (transform precoder) is enabled. When the value of the second domain included in the DCI format used by the first PDCCH is equal to another value, transform precoding (transform precoder) is disabled.

As an embodiment, the technical feature that "at least the first information block between the first information block and the second information block is used for determining the target waveform from the DFT-s-OFDM and the CP-OFDM" includes the following meanings: At least the first information block between the first information block and the second information block is used by the first node device in the present application to determine the target waveform from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: Both the first information block and the second information block are used for determining the target waveform from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: Only the first information block between the first information block and the second information block is used for determining the target waveform from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: All or some parts included in the first information block are used for explicitly or implicitly indicating the target waveform from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: All or some parts included in the first information block are used for explicitly or implicitly indicating enabling/disabling of transform precoding (or transform precoder) during generation of the first PUSCH.

As an embodiment, the technical feature that "at least the first information block between the first information block and the second information block is used for determining the target waveform from the DFT-s-OFDM and the CP-OFDM" includes the following meanings: Whether transform precoding (transform precoder) during generation of the first PUSCH is enabled/disabled depends on a value of at least one parameter included in the first information block.

As an embodiment, the technical feature that "at least the first information block between the first information block and the second information block is used for determining the target waveform from the DFT-s-OFDM and the CP-OFDM" includes the following meanings: A waveform explicitly or implicitly indicated by the first information block from the DFT-s-OFDM and the CP-OFDM is a waveform used by the first PUSCH when the second information block is defaulted.

As an embodiment, the technical feature that "at least the first information block between the first information block and the second information block is used for determining the target waveform from the DFT-s-OFDM and the CP-OFDM" includes the following meanings: A waveform explicitly or implicitly indicated by the first information block from the DFT-s-OFDM and the CP-OFDM is a waveform used by the first PUSCH when the second information block is not configured (or provided).

As an embodiment, the technical feature that "at least the first information block between the first information block and the second information block is used for determining the target waveform from the DFT-s-OFDM and the CP-OFDM" includes the following meanings: The target waveform is determined from the DFT-s-OFDM and the CP-OFDM by whether the second information block is configured (or provided) and by the first information block.

As an embodiment, the technical feature that "at least the first information block between the first information block and the second information block is used for determining the target waveform from the DFT-s-OFDM and the CP-OFDM" includes the following meanings: When the second information block is not configured (or provided), the target waveform is a waveform indicated by an information block other than the first information block or the second information block from the DFT-s-OFDM and the CP-OFDM. When the second information block is configured (or provided), the target waveform is a waveform indicated by the first information block from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: When the second information block is not configured (or provided), the target waveform is a waveform indicated by the first information block from the DFT-s-OFDM and the CP-OFDM. When the second information block is configured (or provided), the target waveform is a waveform indicated by an information block other than the first information block or the second information block from the DFT-s-OFDM and the CP-OFDM.

As an embodiment, the technical feature that "at least the first information block between the first information block and the second information block is used for determining the target waveform from the DFT-s-OFDM and the CP-OFDM" includes the following meanings: The first information block is used for determining a quantity of candidate waveforms of the target waveform. When the quantity of candidate waveforms of the target waveform indicated by the first information block is greater than 1, the second information block is used for indicating the target waveform from more than one candidate waveform of the target waveform.

As an embodiment, the technical feature that "at least the first information block between the first information block and the second information block is used for determining the target waveform from the DFT-s-OFDM and the CP-OFDM" includes the following meanings: The second information block is used for determining a quantity of candidate waveforms of the target waveform. When the quantity of candidate waveforms of the target waveform indicated by the second information block is greater than 1, the first information block is used for indicating the target waveform from more than one candidate waveform of the target waveform.

As an embodiment, the technical feature that "at least the first information block between the first information block and the second information block is used for determining the target waveform from the DFT-s-OFDM and the CP-OFDM" includes the following meanings: The first information block includes a higher layer parameter "msg3-transform-Precoder". When the second information block is not configured (or provided) and a higher layer parameter "transform-Precoder" in an IE "UplinkConfig" is configured (or provided), the target waveform is a waveform configured by the higher layer parameter "transformPrecoder" in the IE "UplinkConfig". When the second information block is not configured (or provided) and the higher layer parameter "transformPrecoder" in the IE "UplinkConfig" is also not configured (or provided), the target waveform is a waveform configured by the higher layer parameter "msg3-transformPrecoder" included in the first information block. When the second information block is configured (or provided) and the higher layer parameter "transformPrecoder" in an IE "UplinkConfig" is configured (or provided), the target waveform is a waveform configured by the higher layer parameter "transformPrecoder" in the IE "UplinkConfig". When the second information block is configured (or provided) and the higher layer parameter "transformPrecoder" in the IE "UplinkConfig" is not configured (or provided), the target waveform is a waveform configured by the higher layer parameter "msg3-transformPrecoder" included in the first information block.

As an embodiment, the technical feature that "at least the first information block between the first information block and the second information block is used for determining the target waveform from the DFT-s-OFDM and the CP-OFDM" includes the following meanings: The first information block includes a higher layer parameter "msg3-transform-Precoder". When the second information block is not configured (or provided) and a higher layer parameter "transform-

Precoder" in an IE "UplinkConfig" is configured (or provided), the target waveform is a waveform configured by the higher layer parameter "transformPrecoder" in the IE "UplinkConfig". When the second information block is not configured (or provided) and the higher layer parameter "transformPrecoder" in the IE "UplinkConfig" is also not configured (or provided), the target waveform is a waveform configured by the higher layer parameter "msg3-transformPrecoder" included in the first information block. When the second information block is configured (or provided), the target waveform is a waveform configured by the higher layer parameter "msg3-transformPrecoder" included in the first information block.

As an embodiment, an MCS used by the first PUSCH belongs to a first MCS set. The first MCS set includes a plurality of MCSs. The first DCI format is used for determining the MCS used by the first PUSCH in the first MCS set. The target waveform is used for determining the first MCS set.

As an embodiment, the target waveform is used for determining an upper limit value of a transmitted power of the first PUSCH.

As an embodiment, the target waveform is used for determining the transmitted power of the first PUSCH.

As an embodiment, the transmitted power of the first PUSCH is equal to a smaller value between a first upper limit value and a first power value. The target waveform is used for determining the first power value.

As an embodiment, when the transmitted power of the first PUSCH is less than the upper limit value of the transmitted power of the first PUSCH, the target waveform is used for determining the transmitted power of the first PUSCH.

As an embodiment, the sender of the first PUSCH is the first node device in the present application.

## Embodiment 2

Embodiment 2 exemplarily shows a schematic diagram of a network architecture according to the present application, as shown in FIG. 2. FIG. 2 shows a diagram of a network architecture 200 of a 5G NR, LTE (Long-Term Evolution) and LTE-A (Long-Term Evolution Advanced) system. The 5G NR or LTE network architecture 200 may be referred to as a 5GS (5G System)/EPS (Evolved Packet System) 200 by using some other suitable terminology. The 5GS/EPS 200 may include one or more UEs (User Equipment) 201, an NG-RAN (next generation radio access network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected to another access network, but for simplicity, these entities/interfaces are not shown. As shown in the figure, the 5GS/EPS provides a packet-switched service. However, a person skilled in the art will easily understand that various concepts presented throughout the present application may be extended to a network providing a circuit-switched service or another cellular network. The NG-RAN includes an NR/evolved nodeB (gNB/eNB) 203 and another gNB (eNB) 204. The gNB (eNB) 203 provides user and control plane protocol terminations towards the UE 201. The gNB (eNB) 203 may be connected to another gNB (eNB) 204 via an Xn/X2 interface (for example, backhaul). The gNB (eNB) 203 may alternatively be referred to as a base station, a base transceiver station, a radio base station, a radio transceiver, a transceiver function, a basic service set (BSS), an extended service set (ESS), a TRP (transmission and reception point), or some other suitable terminology. The gNB (eNB) 203 provides an access point to the 5GC/EPC 210 for the UE 201. An example of the UE 201 includes a cellular phone, a smart phone, a session initiation protocol (SIP) phone, a laptop computer, a personal digital assistant (PDA), a satellite radio, non-ground base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, transportation means, an automobile, a wearable device, or any other similar functional apparatus. A person skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminology. The gNB (eNB) 203 is connected to the 5GC/EPC 210 by using an S1/NG interface. The 5GC/EPC 210 includes an MME (Mobility Management Entity/AMF (Authentication Management Field)/SMF (Session Management Function) 211, another MME/AMF/SMF 214, an S-GW (Service Gateway)/UPF (User Plane Function) 212, and a P-GW (Packet Date Network Gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocol) packets are delivered by using the S-GW/UPF 212. The S-GW/UPF 212 is connected to the P-GW/UPF 213. The P-GW provides UE IP address assignment and other functions. The P-GW/UPF 213 is connected to an Internet service 230. The Internet service 230 includes an Internet protocol service corresponding to an operator, and may specifically include the Internet, an Intranet, an IMS (IP Multimedia Subsystem), and a packet-switched streaming service.

As an embodiment, the UE 201 corresponds to the first node device in the present application.

As an embodiment, the gNB(eNB) 201 corresponds to the second node device in the present application.

## Embodiment 3

Embodiment 3 shows a schematic diagram of an embodiment of a radio protocol architecture of a user plane and a control plane according to the present application, as shown in FIG. 3. FIG. 3 is a schematic diagram of an embodiment of a radio protocol architecture for a user plane 350 and a control plane 300. FIG. 3 shows the radio protocol architecture of the control plane 300 of a first node device (UE or gNB) and a second node device (gNB or UE) by using three layers: layer 1, layer 2, and layer 3. Layer 1 (L1 layer) is the lowest layer and implements various PHY (physical layer) signal processing functions. The L1 layer is referred to as a PHY 301 in the present specification. Layer 2 (L2 layer) 305 is above the PHY 301, and is responsible for a link between the first node device and the second node device through the PHY 301. The L2 layer 305 includes a MAC (Medium Access Control) sublayer 302, an RLC (Radio Link Control) sublayer 303, and a PDCP (Packet Data Convergence Protocol) sublayer 304. These sublayers terminate at the second node device. The PDCP sublayer 304 provides multiplexing between different radio bearers and logical channels. The PDCP sublayer 304 further provides security by encrypting a data packet, and provides a cross-zone mobility support between second node devices for the first node device. The RLC sublayer 303 provides segmentation and reassembly of an upper data packet, retransmission of a lost data packet, and reordering of data packets to compensate for unordered reception caused by HARQ. The MAC sublayer 302 provides multiplexing between logical and transmission channels. The MAC sublayer 302 is further responsible for allocating various radio resources (for example, resource blocks) in a cell between first node devices. The MAC sublayer 302 is further responsible for an HARQ operation. An RRC (Radio Resource Control) sublayer 306 in layer 3 (L3 layer) in the control plane 300 is responsible for obtaining a radio resource (i.e. a radio bearer) and configuring a lower layer by using an RRC signaling between the second node device and the first node device. A radio protocol architecture of the user plane 350 includes layer 1 (L1 layer) and layer 2 (L2 layer). A radio protocol architecture for the first node device and the second node device in the user plane 350 is substantially the same as corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355. However, the PDCP sublayer 354 further provides header compression for an upper data packet to reduce radio transmission overheads. The L2 layer 355 in the user plane 350 further includes an SDAP (Service Data Adaptation Protocol) sublayer 356. The SDAP sublayer 356 is responsible for mapping between a QoS stream and a data radio bearer (DRB, Data Radio Bearer), to support diversity of services. Although not shown in the figure, the first node device may have several upper layers above the L2 layer 355, including a network layer (for example, an IP layer) terminated at a P-GW on a network side and an application layer terminated at another end (for example, a remote UE or a server) of a connection.

As an embodiment, the radio protocol architecture in FIG. 3 is applicable to the first node device in the present application.

As an embodiment, the radio protocol architecture in FIG. 3 is applicable to the second node device in the present application.

## Embodiment 4

FIG. 4 shows a schematic diagram of a first node device and a second node device according to an embodiment of the present application, as shown in FIG. 4.

A first node device (450) may include a controller/processor 490, a data source/buffer 480, a receive processor 452, a transmitter/receiver 456, and a transmit processor 455. The transmitter/receiver 456 includes an antenna 460.

A second node device (410) may include a controller/processor 440, a data source/buffer 430, a receive processor 412, a transmitter/receiver 416, and a transmit processor 415. The transmitter/receiver 416 includes an antenna 420.

In a DL (Downlink), high layer information included in upper packets such as a first information block, a second information block (when the second information block is configured and transmitted in the downlink), and a third information block in the present application is provided to the controller/processor 440. The controller/processor 440 implements functions of an L2 layer and above. In the DL, the controller/processor 440 provides header compression, encryption, packet segmentation and reordering, multiplexing between logical and transport channels, and radio resource allocation to the first node device 450 based on various priority measures. The controller/processor 440 is further responsible for an HARQ operation, retransmission of a lost packet, and signaling to the first node device 450. For example, the high layer information included in the first information block, the second information block (when the second information block is configured and transmitted in the downlink), and the third information block in the present application is generated in the controller/processor 440. The transmit processor 415 implements various signal processing functions used on an L1 layer (i.e. physical layer), including coding, interleaving, scrambling, modulation, power control/allocation, precoding, generation of a physical layer control signaling, and the like. For example, generation of a physical layer signal carrying the first information block, the second information block (when the second information block is configured and transmitted in the downlink), and the third information block in the present application and a physical layer signal carrying a first PDCCH are completed in the transmit processor 415. The generated modulation symbols are divided into parallel streams, and each stream is mapped to a corresponding multi-carrier sub-carrier and/or multi-carrier symbol. Then the transmit processor 415 is mapped to the antenna 420 by using the transmitter 416 to transmit the multi-carrier symbol in a form of a radio frequency signal. At a receiving end, each receiver 456 receives a radio frequency signal by using a corresponding antenna 460 thereof. Each receiver 456 restores baseband information modulated onto a radio frequency carrier, and provides the baseband information to the receive processor 452. The receive processor 452 implements various signal receiving processing functions of the L1 layer. The signal receiving processing function includes receiving the physical layer signal carrying the first information block, the second information block (when the second information block is configured and transmitted in the downlink), and the third information block in the present application and the physical layer signal carrying the first PDCCH, performing demodulation based on various modulation schemes (for example, binary phase shift keying (BPSK) and quadrature phase shift keying (QPSK)) by using a multi-carrier symbol in a multi-carrier symbol stream, then descrambling, decoding, and deinterleaving to restore data or control transmitted by the second node device 410 on a physical channel, and then providing data and control signals to the controller/processor 490. The controller/processor 490 is responsible for the L2 layer and above. The controller/processor 490 interprets the high layer information included in the first information block, the second information block (when the second information block is configured and transmitted in the downlink), and the third information block in the present application. The controller/-processor may be associated with the memory 480 that stores the program code and the data. The memory 480 may be referred to as a computer-readable medium.

In uplink (UL) transmission, similar to downlink transmission, after being generated by the controller/processor 490, high layer information including the second information block (when the second information block is configured and transmitted in an uplink) and high layer information included in a first PUSCH (if the first PUSCH includes the high layer information), the transmit processor 455 implements various signal transmission processing functions for the L1 layer (i.e. physical layer). A physical layer signal carrying the second information block (when the second information block is configured and transmitted in the uplink) and the first PUSCH is generated in the transmit processor 455, mapped to the antenna 460 by using the transmit processor 455 via the transmitter 456, and transmitted in a form of a radio frequency signal. The receiver 416 receives a radio frequency signal by using a corresponding antenna 420 thereof. Each receiver 416 restores baseband information modulated onto a radio frequency carrier, and provides the baseband information to the receive processor 412. The receive processor 412 implements various signal receiving processing functions for the L1 layer (i.e. physical layer), including receiving and processing the physical layer signal carrying the second information block (when the second information block is configured and transmitted in the uplink) and the first PUSCH, and then providing data and/or control signals to the controller/processor 440. Functions of the L2 layer implemented by the controller/processor 440 include interpretation of high layer information, including interpretation of the second information block (when the second information block is configured and transmitted in the uplink) and high layer information carried by the first PUSCH (if the first PUSCH carries the high layer information). The controller/processor may be associated with the buffer 430 that stores the program code and the data. The buffer 430 is a computer-readable medium.

As an embodiment, the first node device 450 includes: at least one processor and at least one memory. The at least one memory includes a computer program code. The at least one memory and the computer program code are configured to be used with the at least one processor. The first node device 450 is at least configured to: receive a first information block; receive a first PDCCH, where a DCI format used by the first PDCCH at least includes a first domain; and send a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the first node device 450 includes: a memory storing a computer-readable instruction program. The computer-readable instruction program generates actions when being executed by at least one processor. The actions include: receiving a first information block; receiving a first PDCCH, where a DCI format used by the first PDCCH at least includes a first domain; and sending a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the second node device 410 includes: at least one processor and at least one memory. The at least one memory includes a computer program code. The at least one memory and the computer program code are configured to be used with the at least one processor. The second node device 410 is at least configured to: send a first information block; send a first PDCCH, where a DCI format used by the first PDCCH at least includes a first domain; and receive a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the second node device 410 includes: a memory storing a computer-readable instruction program. The computer-readable instruction program generates actions when being executed by at least one processor. The actions include: sending a first information block; sending a first PDCCH, where a DCI format used by the first PDCCH at least includes a first domain; and receiving a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the first node device 450 is a user equipment (UE).

As an embodiment, the second node device 410 is a base station device (gNB/eNB).

As an embodiment, the receiver 456 (including the antenna 460), the receive processor 452, and the controller/processor 490 are used for receiving the first information block in the present application.

As an embodiment, the receiver 456 (including the antenna 460) and the receive processor 452 are used for receiving the first PDCCH in the present application.

As an embodiment, the transmitter 456 (including the antenna 460), the transmit processor 455, and the controller/processor 490 are used for sending the first PUSCH in the present application.

As an embodiment, the receiver 456 (including the antenna 460), the receive processor 452, and the controller/processor 490 are used for receiving the second information block (when the second information block is configured and transmitted in the downlink) in the present application.

As an embodiment, the transmitter 456 (including the antenna 460), the transmit processor 455, and the controller/processor 490 are used for sending the second information block (when the second information block is configured and transmitted in the uplink) in the present application.

As an embodiment, the receiver 456 (including the antenna 460), the receive processor 452, and the controller/processor 490 are used for receiving the third information block in the present application.

As an embodiment, the transmitter 416 (including the antenna 420), the transmit processor 415, and the controller/processor 440 are used for sending the first information block in the present application.

As an embodiment, the transmitter 416 (including the antenna 420) and the transmit processor 415 are used for sending the first PDCCH in the present application.

As an embodiment, the receiver 416 (including the antenna 420), the receive processor 412, and the controller/processor 440 are used for receiving the first PUSCH in the present application.

As an embodiment, the transmitter 416 (including the antenna 420), the transmit processor 415, and the controller/processor 440 are used for sending the second information block (when the second information block is configured and transmitted in the downlink) in the present application.

As an embodiment, the receiver 416 (including the antenna 420), the receive processor 412, and the controller/processor 440 are used for sending the received second information block (when the second information block is configured and transmitted in the uplink) in the present application.

As an embodiment, the transmitter 416 (including the antenna 420), the transmit processor 415, and the controller/processor 440 are used for sending the third information block in the present application.

## Embodiment 5

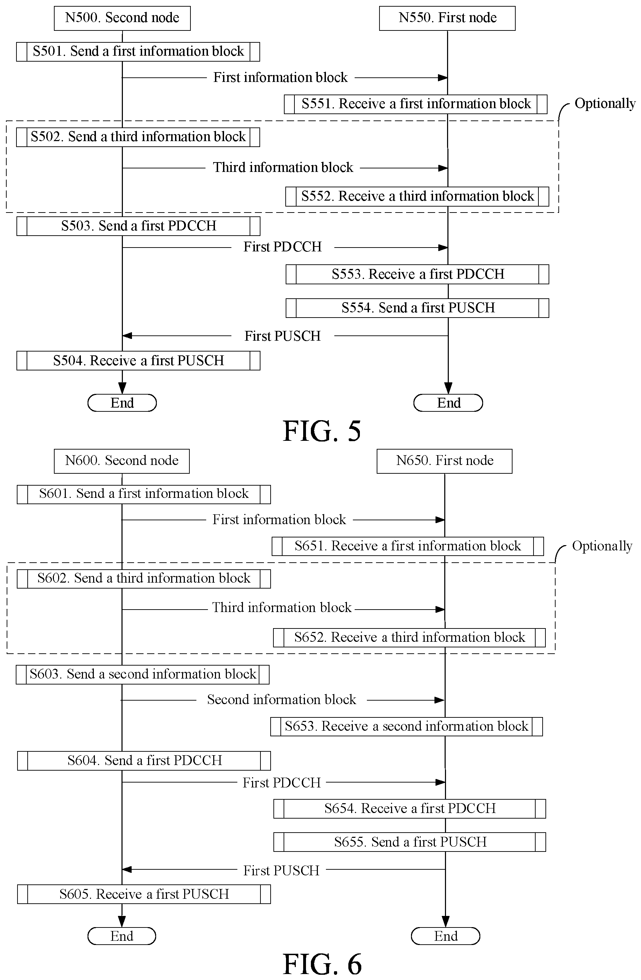

Embodiment 5 exemplarily shows a transmission flowchart of a wireless signal according to an embodiment of the present application, as shown in FIG. 5. In FIG. 5, a second node device N500 is a maintenance base station of a serving cell of a first node device U550, and a part in a dashed box is optional. It should be particularly noted that the sequence in this example does not limit a signal transmission sequence and an implementation sequence in the present application.

For **the second node device N500,** a first information block is sent in step S501. A third information block is sent in step S502. A first PDCCH is sent in step S503. A first PUSCH is received in step S504.

For **the first node device U550,** a first information block is received in step S551. A third information block is received in step S552. A first PDCCH is received in step S553. A first PUSCH is sent in step S554.

In Embodiment 5, a DCI format used by the first PDCCH at least includes a first domain. A waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM. The third information block is used for indicating a second reference waveform. The second reference waveform is one of the DFT-s-OFDM and the CP-OFDM.

## Embodiment 6

Embodiment 6 exemplarily shows a transmission flowchart of a wireless signal according to another embodiment of the present application, as shown in FIG. 6. In FIG. 6, a second node device N600 is a maintenance base station of a serving cell of a first node device U650, and a part in a dashed box is optional. It should be particularly noted that the sequence in this example does not limit a signal transmission sequence and an implementation sequence in the present application.

For the second node device N600, a first information block is sent in step S601. A third information block is sent in step S602. A second information block is sent in step S603. A first PDCCH is sent in step S604. A first PUSCH is received in step S605.

For the first node device U650, a first information block is received in step S651. A third information block is received in step S652. A second information block is received in step S653. A first PDCCH is received in step S654. A first PUSCH is sent in step S655.

As an embodiment, the third information block is transmitted via an air interface or a radio interface.

As an embodiment, the third information block includes an entire or partial high layer signaling or physical layer signaling.

As an embodiment, the third information block includes an entire or partial RRC (Radio Resource Control) layer signaling. Alternatively, the third information block includes an entire or partial MAC (Medium Access Control) layer signaling.

As an embodiment, the third information block includes an entire or partial system information block (SIB, System Information Block).

As an embodiment, the third information block is user equipment-specific (UE-specific).

As an embodiment, the third information block is configured per carrier (carrier). Alternatively, the third information block is configured per BWP (bandwidth part). Alternatively, the third information block is configured per band (band) or per frequency range (FR, Frequency Range).

As an embodiment, the third information block includes all or some domains in a DCI (Downlink Control Information) format.

As an embodiment, the third information block includes an entire or partial IE (Information Element) "PUSCH-Config". Alternatively, the third information block includes an entire or partial IE "BWP-UplinkDedicated". Alternatively, the third information block includes an entire or partial IE "BWP-Uplink". Alternatively, the third information block includes an entire or partial IE "ServingCellConfig". Alternatively, the third information block includes an entire or partial IE "Uplink-Config".

As an embodiment, the third information block includes an entire or partial IE "ConfiguredGrantConfig".

As an embodiment, the third information block includes an entire or partial IE "PUSCH-ConfigCommon".

As an embodiment, the third information block includes a higher layer parameter "transformPrecoder".

As an embodiment, the third information block includes entire or partial PUSCH configuration information.

As an embodiment, the third information block is earlier than the first information block.

As an embodiment, the third information block is later than the first information block.

As an embodiment, the third information block and the first information block are transmitted over a same physical layer channel.

As an embodiment, the third information block and the first information block are respectively transmitted over two different physical layer channels.

As an embodiment, the third information block is earlier than the second information block.

As an embodiment, the third information block is later than the second information block.

As an embodiment, the third information block and the second information block are transmitted over a same physical layer channel.

As an embodiment, the third information block and the second information block are respectively transmitted over two different physical layer channels.

As an embodiment, the third information block and the first information block respectively belong to two different IEs.

As an embodiment, the third information block and the second information block respectively belong to two different IEs.

As an embodiment, the third information block and the second information block belong to a same IE.

## Embodiment 7

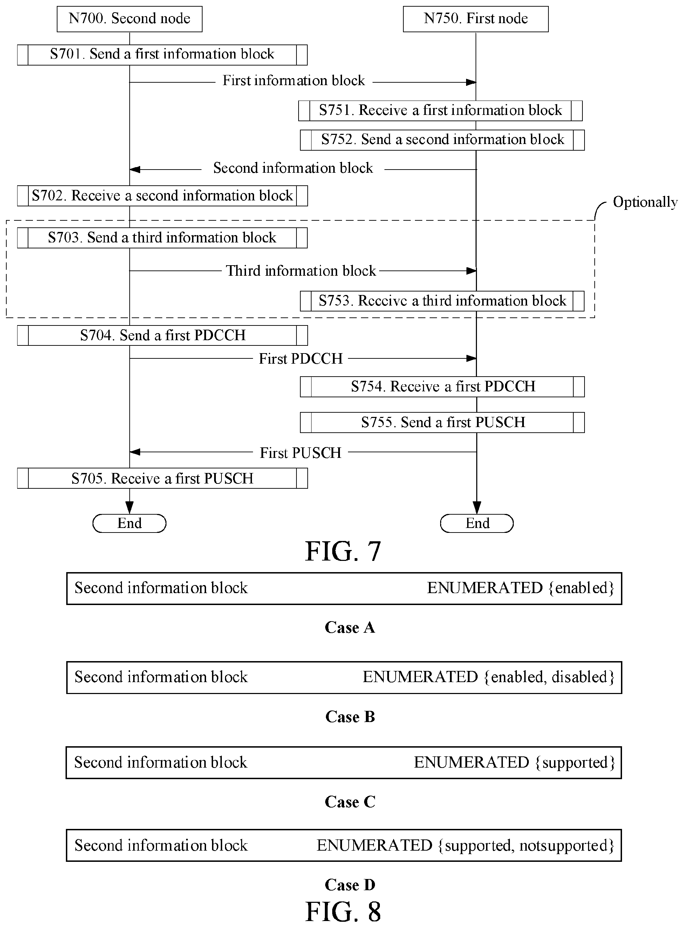

Embodiment 7 exemplarily shows a transmission flowchart of a wireless signal according to another embodiment of the present application, as shown in FIG. 7. In FIG. 7, a second node device N700 is a maintenance base station of a serving cell of a first node device U750, and a part in a dashed box is optional. It should be particularly noted that the sequence in this example does not limit a signal transmission sequence and an implementation sequence in the present application.

For **the second node device N700,** a first information block is sent in step S701. A second information block is received in step S702. A third information block is sent in step S703. A first PDCCH is sent in step S704. A first PUSCH is received in step S705.

For **the first node device U750,** a first information block is received in step S751. A second information block is sent in step S752. A third information block is received in step S753. A first PDCCH is received in step S754. A first PUSCH is sent in step S755.

## Embodiment 8

Embodiment 8 exemplarily shows a schematic diagram of a second information block according to an embodiment of the present application, as shown in FIG. 8. In FIG. 8, in cases A, B, C, and D, a rectangular box represents a second information block when the second information block is configured.

In Embodiment 8, the second information block in the present application is a domain. A value of the second information block is an enumerated value. The target waveform in the present application is related to whether the second information block is configured.

As an embodiment, the second information block is a domain in a higher layer IE, and the value of the second information block is a value of a domain in the higher layer IE.

As an embodiment, the second information block is a domain in an RRC layer signaling, and the value of the second information block is a value of a domain in the RRC layer signaling.

As an embodiment, the value of the second information block is a value of a domain.

As an embodiment, the value of the second information block is a value of a higher layer parameter represented by a domain.

As an embodiment, the second information block is used for determining a value of a higher layer parameter.

As an embodiment, the two expressions "the second information block is a domain" and "the second information block is a higher layer parameter" are equivalent or may be used instead of each other.

As an embodiment, the two expressions "the second information block is a domain" and "the second information block is a parameter in a higher layer signaling" are equivalent or may be used instead of each other.

As an embodiment, the two expressions "the second information block is a domain" and "the second information block is a parameter in an RRC layer signaling" are equivalent or may be used instead of each other.

As an embodiment, the second information block is a domain used for enabling (enable) dynamic waveform conversion.

As an embodiment, the second information block is a domain used for enabling dynamic enabling/disabling of transform precoding (or transform precoder).

As an embodiment, the second information block is a domain used for enabling a DCI format adopted by the first PDCCH to include the second domain.

As an embodiment, the second information block is a domain used for enabling (enable) or disabling (disable) dynamic waveform conversion.

As an embodiment, the second information block is a domain used for enabling or disabling (disable) dynamic enabling/disabling of transform precoding (or transform precoder).

As an embodiment, the second information block is a domain used for enabling or disabling (disable) the DCI format adopted by the first PDCCH to include the second domain.

As an embodiment, the second information block is a domain used for indicating support (support) of dynamic waveform conversion.

As an embodiment, the second information block is a domain used for indicating support of dynamic enabling/-disabling of transform precoding (or transform precoder).

As an embodiment, the second information block is a domain used for indicating that the DCI format adopted by the first PDCCH is supported to include the second domain.

As an embodiment, the second information block is a "dynamicwaveformswitching" domain.

As an embodiment, the second information block is an "enablewaveformswitching" domain.

As an embodiment, the second information block is a "dynamictransformprecoding" domain. Alternatively, the second information block is a "dynamictransformprecodingonoff" domain. Alternatively, the second information block is an "enabledynamictransformprecoding" domain. Alternatively, the second information block is an "enabledynamictransformprecodingonoff' domain.

As an embodiment, the value of the second information block is "enabled".

As an embodiment, the value of the second information block is "enabled" or "disabled".

As an embodiment, the value of the second information block is "supported".

As an embodiment, the value of the second information block is "supported" or "notsupported".

As an embodiment, the value of the second information block is a fixed enumerated value (enumerated).

As an embodiment, a candidate value of the second information block includes only one fixed enumerated value.

As an embodiment, the candidate value of the second information block includes two enumerated values.

As an embodiment, the value of the second information block can only be equal to a fixed enumerated value.

As an embodiment, the value of the second information block may be equal to any one of two enumerated values.

As an embodiment, the technical feature that "the target waveform is related to whether the second information block is configured" includes the following meanings: Whether the second information block is configured is used for determining the target waveform.

As an embodiment, the technical feature that "the target waveform is related to whether the second information block is configured" includes the following meanings: When the second information block is configured, the target waveform is a waveform indicated by the second domain included in the DCI format used by the first PDCCH. Otherwise, the target waveform is a waveform indicated by the first information block.

As an embodiment, the technical feature that "the target waveform is related to whether the second information block is configured" includes the following meanings: When the second information block is configured, the target waveform is a waveform indicated by the second domain included in the DCI format used by the first PDCCH. When the second information block is not configured and a higher layer parameter "transformPrecoder" in an IE "UplinkConfig" is configured (or provided), the target waveform is a waveform indicated by the higher layer parameter "transformPrecoder" in the IE "UplinkConfig". When the second information block is not configured and the higher layer parameter "transformPrecoder" in the IE "UplinkConfig" is also not configured (or provided), the target waveform is a waveform indicated by the first information block.

As an embodiment, the technical feature that "the target waveform is related to whether the second information block is configured" includes the following meanings: When the second information block is configured and the value of the second information block is equal to a value, the target waveform is a waveform indicated by the second domain included in the DCI format used by the first PDCCH. When the second information block is configured and the value of the second information block is equal to another value, the target waveform is a waveform indicated by the first information block. When the second information block is not configured, the target waveform is a waveform indicated by the first information block.

As an embodiment, the technical feature that "the target waveform is related to whether the second information block is configured" includes the following meanings: When the second information block is configured and the value of the second information block is equal to a value, the target waveform is a waveform indicated by the second domain included in the DCI format used by the first PDCCH. When the second information block is configured, the value of the second information block is equal to another value, and a higher layer parameter "transformPrecoder" in an IE "UplinkConfig" is configured (or provided), the target waveform is a waveform indicated by the higher layer parameter "transformPrecoder" in the IE "UplinkConfig". When the second information block is not configured and a higher layer parameter "transform-

Precoder" in an IE "UplinkConfig" is configured (or provided), the target waveform is a waveform indicated by the higher layer parameter "transformPrecoder" in the IE "UplinkConfig". Otherwise, the target waveform is a waveform indicated by the first information block.

As an embodiment, the technical feature that "the target waveform is related to whether the second information block is configured" includes the following meanings: When the second information block is configured and the value of the second information block is equal to a value, the target waveform is a waveform indicated by the second domain included in the DCI format used by the first PDCCH. When the second information block is configured, the value of the second information block is equal to another value, and a higher layer parameter "transformPrecoder" in an IE "UplinkConfig" is configured (or provided), the target waveform is a waveform indicated by the higher layer parameter "transformPrecoder" in the IE "UplinkConfig". Otherwise, the target waveform is a waveform indicated by the first information block.

As an embodiment, the technical feature that "the target waveform is related to whether the second information block is configured" includes the following meanings: When the second information block is configured and the value of the second information block is equal to a value, the target waveform is a waveform indicated by the second domain included in the DCI format used by the first PDCCH. When the second information block is configured and the value of the second information block is equal to another value, the target waveform is a waveform indicated by the first information block. When the second information block is not configured and a higher layer parameter "transformPrecoder" in an IE "UplinkConfig" is configured (or provided), the target waveform is a waveform indicated by the higher layer parameter "transformPrecoder" in the IE "UplinkConfig". When the second information block is not configured and the higher layer parameter "transformPrecoder" in the IE "UplinkConfig" is also not configured (or provided), the target waveform is a waveform indicated by the first information block.

## Embodiment 9

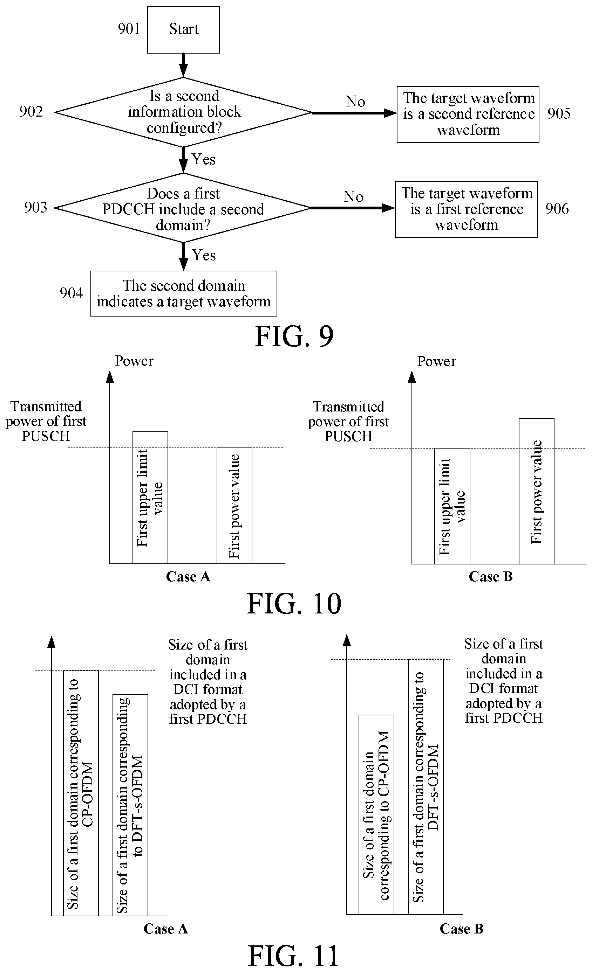

Embodiment 9 exemplarily shows a schematic diagram of a target waveform according to an embodiment of the present application, as shown in FIG. 9. In FIG. 9, each rectangle represents an operation, and each rhombus represents a determining. Starting from step 901, whether a second information block is configured is determined in step 902. Whether a first PDCCH includes a second domain is determined in step 903. The second domain indicates a target waveform in step 904. The target waveform is a second reference waveform in step 905. The target waveform is a first reference waveform in step 906. It should be particularly noted that sequence numbers of steps are merely used as step identifiers in an example, and do not limit a sequence of performing the steps.

In Embodiment 9, a first information block in the present application is used for indicating the first reference waveform. A third information block in the present application is used for indicating the second reference waveform. The first reference waveform is one of DFT-s-OFDM and CP-OFDM, and the second reference waveform is one of the DFT-s-OFDM and the CP-OFDM. When the second information block in the present application is not configured, the target waveform in the present application is the second reference waveform. When the second information block is configured and a DCI format used by the first PDCCH in the present application does not include the second domain in the present application, the target waveform is the first reference waveform.

As an embodiment, the technical feature that "the first information block is used for indicating a first reference waveform" includes the following meanings: The first information block is used by the second node device in the present application to indicate the first reference waveform.

As an embodiment, the technical feature that "the first information block is used for indicating a first reference waveform" includes the following meanings: All or some parts included in the first information block are used for explicitly or implicitly indicating the first reference waveform.

As an embodiment, the technical feature that "the first information block is used for indicating a first reference waveform" includes the following meanings: The first information block is used for indicating the first reference waveform from the DFT-s-OFDM and the CP-OFDM.

As an embodiment, the technical feature that "the first information block is used for indicating a first reference waveform" includes the following meanings: The first information block is used for indicating whether the first reference waveform is the DFT-s-OFDM or the CP-OFDM.

As an embodiment, the technical feature that "the first information block is used for indicating a first reference waveform" includes the following meanings: The first information block is used for indicating whether transform precoding (or transform precoder) is on (or enabled), and the first reference waveform is a waveform corresponding to enabling or disabling of transform precoding (or transform precoder) indicated by the first information block.

As an embodiment, the technical feature that "the third information block is used for indicating a second reference waveform" includes the following meanings: The third information block is used by the second node device in the present application to indicate the second reference waveform.

As an embodiment, the technical feature that "the third information block is used for indicating a second reference waveform" includes the following meanings: All or some parts included in the third information block are used for explicitly or implicitly indicating the second reference waveform.

As an embodiment, the technical feature that "the third information block is used for indicating a second reference waveform" includes the following meanings: The third information block is used for indicating the second reference waveform from the DFT-s-OFDM and the CP-OFDM.

As an embodiment, the technical feature that "the first information block is used for indicating a first reference waveform" includes the following meanings: The third information block is used for indicating whether the second reference waveform is the DFT-s-OFDM or the CP-OFDM.

As an embodiment, the technical feature that "the third information block is used for indicating a second reference waveform" includes the following meanings: The third information block is used for indicating whether transform precoding (or transform precoder) is on (or enabled), and the second reference waveform is a waveform corresponding to enabling or disabling of transform precoding (or transform precoder) indicated by the third information block.

As an embodiment, candidates of the first reference waveform include the DFT-s-OFDM and the CP-OFDM.

As an embodiment, the first reference waveform may be the DFT-s-OFDM or the CP-OFDM.

As an embodiment, candidates of the second reference waveform include the DFT-s-OFDM and the CP-OFDM.

As an embodiment, the second reference waveform may be the DFT-s-OFDM or the CP-OFDM.

As an embodiment, the first reference waveform and the second reference waveform may be the same or may be different.

As an embodiment, the first reference waveform and the second reference waveform are separately indicated by using the first information block and the third information block.

As an embodiment, "the second information block is configured and a DCI format used by the first PDCCH does not include the second domain" and "the second information block is configured and the second information block indicates that the DCI format used by the first PDCCH does not include the second domain" are equivalent or may be used instead of each other.

As an embodiment, "the second information block is configured and the DCI format used by the first PDCCH does not include the second domain" and "the second information block is configured and the second information block indicates off (or disabling) of dynamic waveform conversion" are equivalent or may be used instead of each other.

As an embodiment, "the second information block is configured and the DCI format used by the first PDCCH does not include the second domain" and "the second information block is configured and the second information block indicates off (or disabling) of dynamic enabling/disabling of transform precoding (or transform precoder)" are equivalent or may be used instead of each other.

As an embodiment, "the second information block is configured and the DCI format used by the first PDCCH does not include the second domain" and "the second information block is configured and the second information block indicates not support of dynamic enabling/disabling of transform precoding (or transform precoder)" are equivalent or may be used instead of each other.

As an embodiment, "the second information block is configured and the DCI format used by the first PDCCH does not include the second domain" and "the second information block is configured and a value of a domain in the second information block is equal to a predefined value" are equivalent or may be used instead of each other.

As an embodiment, when the second information block is configured and the second information block indicates that the DCI format used by the first PDCCH includes the second domain, the second domain included in the DCI format used by the first PDCCH indicates the target waveform.

## **Embodiment 10**

Embodiment 10 exemplarily shows a schematic diagram of a transmitted power of a first PUSCH according to an embodiment of the present application, as shown in FIG. 10. In FIG. 10, in case A and case B, a vertical axis represents power, and two rectangles in each case respectively represent a first upper limit value and a first power value. In case A, the first upper limit value is greater than the first power value. In case B, the first upper limit value is less than the first power value.

In Embodiment 10, a transmitted power of the first PUSCH in the present application is equal to a smaller value between the first upper limit value and the first power value. A first parameter value is used for determining the first upper limit value. A second parameter value is used for determining the first power value. The first parameter value is related to the target waveform in the present application, and the second parameter value is related to the target waveform.

As an embodiment, a unit of the transmitted power of the first PUSCH is dBm.

As an embodiment, the unit of the transmitted power of the first PUSCH is watt or milliwatt.

As an embodiment, the transmitted power of the first PUSCH is a transmission power (transmission power) in a PUSCH transmission occasion (transmission occasion) to which the first PUSCH belongs in a time domain and an uplink BWP to which the first PUSCH belongs in a frequency domain.

As an embodiment, the first upper limit value is a value of $P_{\text{CMAX},f,c}(i)$ corresponding to the first PUSCH.

As an embodiment, the first upper limit value is a configured maximum output power (configured maximum output power) of a sender of the first PUSCH.

As an embodiment, the first upper limit value is a configured maximum output power of the sender of the first PUSCH in a carrier occupied by a serving cell to which the first PUSCH belongs and in a PUSCH transmission occasion to which the first PUSCH belongs in the time domain.

As an embodiment, the first upper limit value is a power value related to a radio frequency characteristic of the sender of the first PUSCH over the first PUSCH.

As an embodiment, the first power value is a transmitted power value of the first PUSCH when the transmitted power does not exceed the first upper limit value.

As an embodiment, the first power value is a transmitted power value obtained through calculation by means of open loop (open loop) power control and closed loop (close loop) power control when the first PUSCH is transmitted.

As an embodiment, the first power value is a transmitted power value related to a path loss (PL, pathloss) of the sender of the first PUSCH.

As an embodiment, the first power value is a power value that includes closed loop power control and that is used for calculating the transmitted power of the first PUSCH.

As an embodiment, the first power value is a power value related to a BPRE (bit per resource element) value.

As an embodiment, the technical feature that "the transmitted power of the first PUSCH is equal to a smaller value between a first upper limit value and a first power value" includes the following meanings: When the first upper limit value is greater than the first power value, the transmitted power of the first PUSCH is equal to the first power value. When the first upper limit value is less than the first power value, the transmitted power of the first PUSCH is equal to the first upper limit value. When the first upper limit value is equal to the first power value, the transmitted power of the first PUSCH is equal to the first upper limit value or the first power value.

As an embodiment, a unit of the first upper limit value is dBm, and a unit of the first power value is dBm.

As an embodiment, the unit of the first upper limit value is watt or milliwatt, and the unit of the first power value is watt or milliwatt.

As an embodiment, the unit of the first upper limit value, the unit of the first power value, and the transmitted power of the first PUSCH are all the same.

As an embodiment, the first parameter value is a value of MPR (maximum power reduction).

As an embodiment, the first parameter value is a value of A-MPR (additional maximum power reduction).

As an embodiment, the first parameter value is a value of P-MPR (power management maximum power reduction).

As an embodiment, the first parameter value is a value of a parameter other than the MPR, the A-MPR, or the P-MPR.

As an embodiment, the technical feature that "a first parameter value is used for determining the first upper limit value" includes the following meanings: The first parameter value is used by the first node device in the present application to determine the first upper limit value.

As an embodiment, the technical feature that "a first parameter value is used for determining the first upper limit value" includes the following meanings: The first parameter value is used for determining a value interval (or value range) to which the first upper limit value belongs.

As an embodiment, the technical feature that "a first parameter value is used for determining the first upper limit value" includes the following meanings: The first parameter value is used for determining a lower boundary of the value interval (or value range) to which the first upper limit value belongs.

As an embodiment, the technical feature that "a first parameter value is used for determining the first upper limit value" includes the following meanings: The first parameter value is used for determining a lower boundary value of the first upper limit value.

As an embodiment, the technical feature that "a first parameter value is used for determining the first upper limit value" includes the following meanings: The first parameter value is used for determining a value interval (or value range) to which the first upper limit value belongs, and the sender of the first PUSCH is allowed to set the first upper limit value within the value interval (or value range) to which the first upper limit value belongs.

As an embodiment, the second parameter value is a value of $P_{O\_PUSCH,b,f,c}(j)$ corresponding to the first PUSCH.

As an embodiment, the second parameter value is a value of $\Delta_{TF,b,f,c}(i)$ corresponding to the first PUSCH.

As an embodiment, the second parameter value is a value of $f_{b,f,c}(i,l)$ corresponding to the first PUSCH.

As an embodiment, the second parameter value is a value of $2^{\mu} \cdot M_{RB,b,f,c}^{PUSCH}(i)$ corresponding to the first PUSCH.

As an embodiment, the second parameter value is a value of a parameter other than $P_{O\_PUSCH,b,f,c}(j)$ corresponding to the first PUSCH, $\Delta_{TF,b,f,c}(i)$ corresponding to the first PUSCH, $f_{b,f,cf,c}(i, l)$ corresponding to the first

PUSCH, or $2^{\mu} \cdot M_{\text{RB, b, } f,c}^{\text{PUSCH}}(i)$ corresponding to the first PUSCH.

As an embodiment, the technical feature that "a second parameter value is used for determining the first power value" includes the following meanings: The second parameter value is used by the first node device in the present application to determine the first power value.

As an embodiment, the technical feature that "a second parameter value is used for determining the first power value" includes the following meanings: The second parameter value is used for calculating the first power value.

As an embodiment, the technical feature that "a second parameter value is used for determining the first power value" includes the following meanings: The first power value is linearly related to the second parameter value.

As an embodiment, the technical feature that "a second parameter value is used for determining the first power value" includes the following meanings: The first power value is linearly related to a logarithmic value of the second parameter value.

As an embodiment, the technical feature that "a second parameter value is used for determining the first power value" includes the following meanings: The second parameter value is used for determining the first power value according to a mapping relationship or a correspondence.

As an embodiment, the technical feature that "a second parameter value is used for determining the first power value" includes the following meanings: The first power value is equal to

$$P_{0\_\text{PUSCH, b, } f,c}(j) + 10\,log_{10}(2^{\mu} \cdot M_{\text{RB, b, } f,c}^{\text{PUSCH}}(i)) + \alpha_{b,f,c}(j) \cdot PL_{b,f,c}(q_d) + \Delta_{\text{TF,b, } f,c}(i) + f_{\text{b, } f,c}(i,l)$$

, where a value of one of $P_{0\_\text{PUSCH, b, } f,c}(j)$, $2^{\mu} \cdot M_{\text{RB, b, } f,c}^{\text{PUSCH}}(i)$, $\Delta_{\text{TF,b, } f,c}(i)$, and $f_{b,f,c}(i,l)$ is equal to the second parameter value.

As an embodiment, the technical feature that "a second parameter value is used for determining the first power value" includes the following meanings: The first power value is equal to

$$P_{0\_\text{PUSCH, b, } f,c}(j) + 10\,log_{10}(2^{\mu} \cdot M_{\text{RB, b, } f,c}^{\text{PUSCH}}(i)) + \alpha_{b,f,c}(j) \cdot PL_{b,f,c}(q_d) + \Delta_{\text{TF,b, } f,c}(i) + f_{\text{b, } f,c}(i,l) + \vartheta$$

, where a value of $\vartheta$ is equal to the second parameter value.

As an embodiment, the technical feature that "the first parameter value is related to the target waveform" includes the following meanings: The target waveform is used for determining the first parameter value.

As an embodiment, the technical feature that "the first parameter value is related to the target waveform" includes the following meanings: The target waveform is used for determining the first parameter value according to a predefined mapping relationship or correspondence.

As an embodiment, the technical feature that "the first parameter value is related to the target waveform" includes the following meanings: The target waveform is used for determining the first parameter value according to a predefined table relationship.

As an embodiment, the technical feature that "the first parameter value is related to the target waveform" includes the following meanings: The target waveform is used for determining the first parameter value according to a predefined function relationship.

As an embodiment, the technical feature that "the first parameter value is related to the target waveform" includes the following meanings: The target waveform and an MCS (modulation and coding scheme) used by the first PUSCH are both used for determining the first parameter value according to a predefined table relationship.

As an embodiment, the technical feature that "the first parameter value is related to the target waveform" includes the following meanings: The target waveform, an MCS used by the first PUSCH, and positions of frequency domain resources occupied by the first PUSCH are used for determining the first parameter value according to a predefined table relationship.

As an embodiment, the technical feature that "the first parameter value is related to the target waveform" includes the following meanings: At least one of the target waveform and {a power level of a sender of the first PUSCH, a carrier frequency of the first PUSCH, a receiving device type of the first PUSCH, a quantity of frequency domain resources occupied by the first PUSCH, a sub-carrier spacing of sub-carriers occupied by the first PUSCH, frequency domain positions of the frequency domain resources occupied by the first PUSCH, an MCS used by the first PUSCH} is used for determining the first parameter value.

As an embodiment, the technical feature that "the second parameter value is related to the target waveform" includes the following meanings: The target waveform is used for determining the second parameter value.

As an embodiment, the technical feature that "the second parameter value is related to the target waveform" includes the following meanings: The target waveform is used for determining the second parameter value according to a predefined mapping relationship or correspondence, or a conditional relationship.

As an embodiment, the technical feature that "the second parameter value is related to the target waveform" includes the following meanings: Different waveforms correspond to different candidate values of the second parameter value according to a predefined mapping relationship or correspondence, or a conditional relationship. The second parameter value is a candidate value corresponding to the target waveform.

As an embodiment, the technical feature that "the second parameter value is related to the target waveform" includes the following meanings: The target waveform is used for determining the second parameter value according to a predefined table relationship.

As an embodiment, the technical feature that "the second parameter value is related to the target waveform" includes the following meanings: The second parameter value is a value of $P_{O\_PUSCH,b,f,c}(i)$ corresponding to the first PUSCH, and a value of parameter j in $P_{O\_PUSCH,b,f,c}(i)$ corresponding to the first PUSCH is related to the target waveform.

As an embodiment, the technical feature that "the second parameter value is related to the target waveform" includes the following meanings: The second parameter value is a value of $f_{b,f,c}(i,l)$ corresponding to the first PUSCH, and a value of parameter 1 in $f_{b,f,c}(i,l)$ corresponding to the first PUSCH is related to the target waveform.

As an embodiment, the technical feature that "the second parameter value is related to the target waveform" includes the following meanings: The second parameter value is a value of $\Delta_{TF,b,f,c}(i)$ corresponding to the first PUSCH, and $\Delta_{TF,b,cf,c}(i)$ corresponding to the first PUSCH satisfies:

$$\Delta_{TF,f,c}(i) = 10\,log_{10}\left((2^{BPRE\cdot K_s} - 1)\cdot\beta_{offset}^{PUSCH}\right)$$

where $K_s$ is related to the target waveform, and $\beta_{offset}^{PUSCH}$ is equal to a predefined or configured β offset value.

As an embodiment, the technical feature that "the second parameter value is related to the target waveform" includes the following meanings: The second parameter value is a value of $\Delta_{TF,b,f,c}(i)$ corresponding to the first PUSCH, and $\Delta_{TF,b,f,c}(i)$ corresponding to the first PUSCH satisfies:

$$\Delta_{TF,f,c}(i) = 10\,log_{10}\left((2^{BPRE\cdot K_s\cdot K_w} - 1)\cdot\beta_{offset}^{PUSCH}\right)$$

where $K_s$ is a configured parameter, $K_w$ is related to the target waveform, and $\beta_{offset}^{PUSCH}$ is equal to a predefined or configured β offset value.

As an embodiment, the technical feature that "the second parameter value is related to the target waveform" includes the following meanings: The second parameter value is a value of $\Delta_{TF,b,f,c}(i)$ corresponding to the first PUSCH, and $\Delta_{TF,b,f,c}(i)$ corresponding to the first PUSCH satisfies:

$$\Delta_{TF,f,c}(i) = 10\,log_{10}\left(K_w\cdot(2^{BPRE\cdot K_s} - 1)\cdot\beta_{offset}^{PUSCH}\right)$$

where $K_s$ is a configured parameter, $K_w$ is related to the target waveform, and $\beta_{offset}^{PUSCH}$ is equal to a predefined or configured β offset value.

As an embodiment, the technical feature that "the second parameter value is related to the target waveform" includes the following meanings: The second parameter value is a value of $\Delta_{TF,b,f,c}(i)$ corresponding to the first PUSCH, and $\Delta_{TF,b,f,c}(i)$ corresponding to the first PUSCH satisfies:

$$\Delta_{TF,f,c}(i) = 10\,log_{10}\left((2^{BPRE\cdot K_s} - 1)/K_w\cdot\beta_{offset}^{PUSCH}\right)$$

where $K_s$ is a configured parameter, $K_w$ is related to the target waveform, and $\beta_{offset}^{PUSCH}$ is equal to a predefined or configured β offset value.

As an embodiment, the technical feature that "the second parameter value is related to the target waveform" includes the following meanings: The second parameter value is a value of $\Delta_{TF,b,f,c}(i)$ corresponding to the first PUSCH, and $\Delta_{TF,b,f,c}(i)$ corresponding to the first PUSCH satisfies:

$$\Delta_{\text{TF},f,c}(i) = 10\,log_{10}\left(\left(2^{\text{BPRE}\cdot(K_s - K_w)} - 1\right)\cdot \beta_{\text{offset}}^{\text{PUSCH}}\right)$$

where $K_s$ is a configured parameter, $K_w$ is related to the target waveform, and $\beta_{\text{offset}}^{\text{PUSCH}}$ is equal to a predefined or configured β offset value.

As an embodiment, the technical feature that "the second parameter value is related to the target waveform" includes the following meanings: The second parameter value is a value of $\Delta_{\text{TF,b},f,c}(i)$ corresponding to the first PUSCH, and $\Delta_{\text{TF,b}}(i)$ corresponding to the first PUSCH satisfies:

$$\Delta_{\text{TF},f,c}(i) = 10\,log_{10}\left(\left(2^{\text{BPRE}\cdot(K_s + K_w)} - 1\right)\cdot \beta_{\text{offset}}^{\text{PUSCH}}\right)$$

where $K_s$ is a configured parameter, $K_w$ is related to the target waveform, and $\beta_{\text{offset}}^{\text{PUSCH}}$ is equal to a predefined or configured β offset value.

As an embodiment, the technical feature that "the second parameter value is related to the target waveform" includes the following meanings: The target waveform is used for determining a sub-parameter according to the correspondence or the conditional relationship, and the sub-parameter is used for calculating the second parameter value.

**Embodiment 11**

Embodiment 11 exemplarily shows a schematic diagram of a size of a first domain according to an embodiment of the present application, as shown in FIG. 11. In FIG. 11, in case A and case B, a light-colored rectangle represents a size of a first domain corresponding to CP-OFDM, and a dark-colored rectangle represents a size of a first domain corresponding to DFT-s-OFDM.

In Embodiment 11, a size of the first domain included in a DCI format used by the first PDCCH in the present application is equal to a larger size between a size of the first domain corresponding to the DFT-s-OFDM and a size of the first domain corresponding to the CP-OFDM.

As an embodiment, the size of the first domain included in the DCI format used by the first PDCCH is a quantity of bits included in the first domain in the DCI format used by the first PDCCH.

As an embodiment, the size of the first domain included in the DCI format used by the first PDCCH is a quantity of information bits included in the first domain in the DCI format used by the first PDCCH.

As an embodiment, the size of the first domain included in the DCI format used by the first PDCCH is a bit width (bitwidth) of the first domain in the DCI format used by the first PDCCH.

As an embodiment, the size of the first domain included in the DCI format used by the first PDCCH is a quantity of non-padding bits included in the first domain in the DCI format used by the first PDCCH.

As an embodiment, the size of the first domain included in the DCI format used by the first PDCCH is a total quantity of non-padding bits and padding bits included in the first domain in the DCI format used by the first PDCCH.

As an embodiment, the size of the first domain included in the DCI format used by the first PDCCH may be equal to 0.

As an embodiment, the size of the first domain included in the DCI format used by the first PDCCH is greater than 0.

As an embodiment, the DFT-s-OFDM corresponds to only one candidate size of the first domain.

As an embodiment, the DFT-s-OFDM corresponds to a plurality of candidate sizes of the first domain.

As an embodiment, the CP-OFDM corresponds to only one candidate size of the first domain.

As an embodiment, the CP-OFDM corresponds to a plurality of candidate sizes of the first domain.

As an embodiment, the size of the first domain corresponding to the DFT-s-OFDM is a candidate size of the first domain of the DFT-s-OFDM.

As an embodiment, the size of the first domain corresponding to the DFT-s-OFDM is a candidate size of the first domain when a PUSCH using the DFT-s-OFDM is scheduled.

As an embodiment, the size of the first domain corresponding to the DFT-s-OFDM is a candidate size of the first domain included in the DCI format used by the first PDCCH when the first PUSCH uses the DFT-s-OFDM.

As an embodiment, in a case that another parameter or state affecting the size of the first domain is given, the size of the first domain corresponding to the DFT-s-OFDM is the size of the first domain included in the DCI format used by the first PDCCH when the first PUSCH uses the DFT-s-OFDM.

As an embodiment, in a case that a parameter or state affecting the size of the first domain other than enabling/disabling of coding precoding (or transform precoder) is given, the size of the first domain corresponding to the DFT-s-OFDM is the size of the first domain included in the DCI format used by the first PDCCH when the first PUSCH uses the DFT-s-OFDM.

As an embodiment, in a case that a value or state of another parameter is given, the DFT-s-OFDM corresponds to only one candidate size of the first domain.

As an embodiment, the size of the first domain corresponding to the DFT-s-OFDM is the size of the first domain when a PUSCH using the DFT-s-OFDM is scheduled in a case that a parameter value set is given. The given parameter value set includes at least one of parameter values: a transmission scheme (codebook (codebook)-based or non-codebook (non-codebook)-based transmission), a full power mode (full power mode), a max rank (max rank), a codebook subset (codebook subset), a demodulation reference signal type, a demodulation reference signal maximum length, a modulation and coding scheme, and an SRS resource indicator value.

As an embodiment, the size of the first domain corresponding to the DFT-s-OFDM is equal to the size of the first domain included in the DCI format used by the first PDCCH when it is assumed that the target waveform is the DFT-s-OFDM.

As an embodiment, the size of the first domain corresponding to the DFT-s-OFDM is equal to the size of the first domain included in the DCI format used by the first PDCCH when it is assumed that transform precoding (or transform precoder) is enabled.

As an embodiment, the size of the first domain corresponding to the CP-OFDM is a possible size of the first domain for the CP-OFDM.

As an embodiment, the size of the first domain corresponding to the CP-OFDM is a possible size of the first domain when a PUSCH using the CP-OFDM is scheduled.

As an embodiment, the size of the first domain corresponding to the CP-OFDM is a candidate size of the first domain included in the DCI format used by the first PDCCH when the first PUSCH uses the CP-OFDM.

As an embodiment, in a case that another parameter or state affecting the size of the first domain is given, the size of the first domain corresponding to the CP-OFDM is the size of the first domain included in the DCI format used by the first PDCCH when the first PUSCH uses the CP-OFDM.

As an embodiment, in a case that a parameter or state affecting the size of the first domain other than enabling/disabling of coding precoding (or transform precoder) is given, the size of the first domain corresponding to the CP-OFDM is the size of the first domain included in the DCI format used by the first PDCCH when the first PUSCH uses the CP-OFDM.

As an embodiment, in a case that a value or state of another parameter is given, the CP-OFDM corresponds to only one candidate size of the first domain.

As an embodiment, the size of the first domain corresponding to the CP-OFDM is the size of the first domain when a PUSCH using the CP-OFDM is scheduled in a case that a parameter value set is given. The given parameter value set includes at least one of parameter values: a transmission scheme (codebook (codebook)-based or non-codebook (non-codebook)-based transmission), a full power mode (full power mode), a max rank (max rank), a codebook subset (codebook subset), a demodulation reference signal type, a demodulation reference signal maximum length, a modulation and coding scheme, and an SRS resource indicator value.

As an embodiment, the size of the first domain corresponding to the CP-OFDM is equal to the size of the first domain included in the DCI format used by the first PDCCH when it is assumed that the target waveform is the CP-OFDM.

As an embodiment, the size of the first domain corresponding to the CP-OFDM is equal to the size of the first domain included in the DCI format used by the first PDCCH when it is assumed that transform precoding (or transform precoder) is disabled.

As an embodiment, the size of the first domain when transform precoding (or transform precoder) is disabled is always not less than the size of the first domain when transform precoding (or transform precoder) is enabled.

As an embodiment, the size of the first domain when transform precoding (or transform precoder) is disabled is always not greater than the size of the first domain when transform precoding (or transform precoder) is enabled.

As an embodiment, the size of the first domain corresponding to the DFT-s-OFDM is always not less than the size of the first domain corresponding to the CP-OFDM.

As an embodiment, the size of the first domain corresponding to the DFT-s-OFDM is always not greater than the size of the first domain corresponding to the CP-OFDM.

As an embodiment, "the size of the first domain corresponding to the DFT-s-OFDM" and "the corresponding size of the first domain when transform precoding (or transform precoder) is enabled (enable)" are equivalent or may be used instead of each other.

As an embodiment, "the size of the first domain corresponding to the DFT-s-OFDM" and "the corresponding size of the first domain when transform precoding (or transform precoder) is disabled (disable)" are equivalent or may be used instead of each other.

As an embodiment, the technical feature that "a size of the first domain included in the DCI format used by the first PDCCH is equal to a larger size between a size of the first domain corresponding to the DFT-s-OFDM and a size of the first domain corresponding to the CP-OFDM" includes the following meanings: When the size of the first domain corresponding to the DFT-s-OFDM is greater than the size of the first domain corresponding to the CP-OFDM, the size of the first domain included in the DCI format used by the first PDCCH is equal to the size of the first domain corresponding to the DFT-s-OFDM. When the size of the first domain corresponding to the DFT-s-OFDM is less than the size of the first domain corresponding to the CP-OFDM, the size of the first domain included in the DCI format used by the first PDCCH is equal to the size of the first domain corresponding to the CP-OFDM. When the size of the first domain corresponding to the DFT-s-OFDM is equal to the size of the first domain corresponding to the CP-OFDM, the size of the first domain included in the DCI format used by the first PDCCH is equal to an equal size of the first domain corresponding to the DFT-s-OFDM and the CP-OFDM.

As an embodiment, the technical feature that "a size of the first domain included in the DCI format used by the first PDCCH is equal to a larger size between a size of the first domain corresponding to the DFT-s-OFDM and a size of the first domain corresponding to the CP-OFDM" includes the following meanings: The size of the first domain included in the DCI format used by the first PDCCH is a maximum size of the first domain that can be obtained in a case that the first domain included in the DCI format used by the first PDCCH is the DFT-s-OFDM or the CP-OFDM.

As an embodiment, the technical feature that "a size of the first domain included in the DCI format used by the first PDCCH is equal to a larger size between a size of the first domain corresponding to the DFT-s-OFDM and a size of the first domain corresponding to the CP-OFDM" includes the following meanings: The size of the first domain corresponding to the DFT-s-OFDM is one of X2 candidate sizes, and the size of the first domain corresponding to the CP-OFDM is one of X2 candidate sizes, where X2 is not less than 2. The X2 candidate sizes respectively correspond to X2 parameter value combinations one to one. Any parameter value combination in the X2 parameter value combinations includes at least one parameter value. At least one parameter value combination among the X2 parameter value combinations includes a parameter value of enabling/disabling of transform precoding (or transform precoder). In a case that parameter values other than all of the parameter values of enabling/disabling of transform precoding (or transform precoder) included in the X2 parameter value combinations are given, a maximum value of a parameter value combination of enabling/disabling of transform precoding (or transform precoder) included in X2 parameter value combinations in all corresponding candidate sizes among the X2 candidate sizes is provided.

As an embodiment, the technical feature that "a size of the first domain included in the DCI format used by the first PDCCH is equal to a larger size between a size of the first domain corresponding to the DFT-s-OFDM and a size of the first domain corresponding to the CP-OFDM" includes the following meanings: The size of the first domain corresponding to the DFT-s-OFDM is always not greater than the size of the first domain corresponding to the CP-OFDM, and the size of the first domain included in the DCI format used by the first PDCCH is equal to the size of the first domain corresponding to the CP-OFDM.

As an embodiment, the technical feature that "a size of the first domain included in the DCI format used by the first PDCCH is equal to a larger size between a size of the first domain corresponding to the DFT-s-OFDM and a size of the first domain corresponding to the CP-OFDM" includes the following meanings: The size of the first domain corresponding to the DFT-s-OFDM is always not less than the size of the first domain corresponding to the CP-OFDM, and the size of the first domain included in the DCI format used by the first PDCCH is equal to the size of the first domain corresponding to the DFT-s-OFDM.

As an embodiment, when the size of the first domain corresponding to the DFT-s-OFDM is not equal to the size of the first domain corresponding to the CP-OFDM, a "0" bit or a "1" bit is added to the first domain having a small size, until the size of the first domain corresponding to the DFT-s-OFDM is equal to the size of the first domain corresponding to the CP-OFDM after the bits are added.

As an embodiment, when the size of the first domain corresponding to the DFT-s-OFDM is not equal to the size of the first domain corresponding to the CP-OFDM, at least one most significant bit (MSB, Most Significant bit) equal to "0" is added to the first domain having a smaller size, until the size of the first domain corresponding to the DFT-s-OFDM is equal to the size of the first domain corresponding to the CP-OFDM after bits are added.

As an embodiment, when the size of the first domain corresponding to the DFT-s-OFDM is not equal to the size of the first domain corresponding to the CP-OFDM, at least one most significant bit (MSB, Most Significant bit) equal to "1" is added to the first domain having a smaller size, until the size of the first domain corresponding to the DFT-s-OFDM is equal to the size of the first domain corresponding to the CP-OFDM after bits are added.

As an embodiment, when the size of the first domain corresponding to the DFT-s-OFDM is not equal to the size of the first domain corresponding to the CP-OFDM, at least one least significant bit (LSB, Least Significant bit) equal to "0" is added to the first domain having a small size, until the size of the first domain corresponding to the DFT-s-OFDM is equal to the size of the first domain corresponding to the CP-OFDM after the bits are added.

As an embodiment, when the size of the first domain corresponding to the DFT-s-OFDM is not equal to the size of the first domain corresponding to the CP-OFDM, at least one least significant bit (LSB, Least Significant bit) equal to "1" is added to the first domain having a small size, until the size of the first domain corresponding to the DFT-s-OFDM is equal to the size of the first domain corresponding to the CP-OFDM after the bits are added.

## Embodiment 12

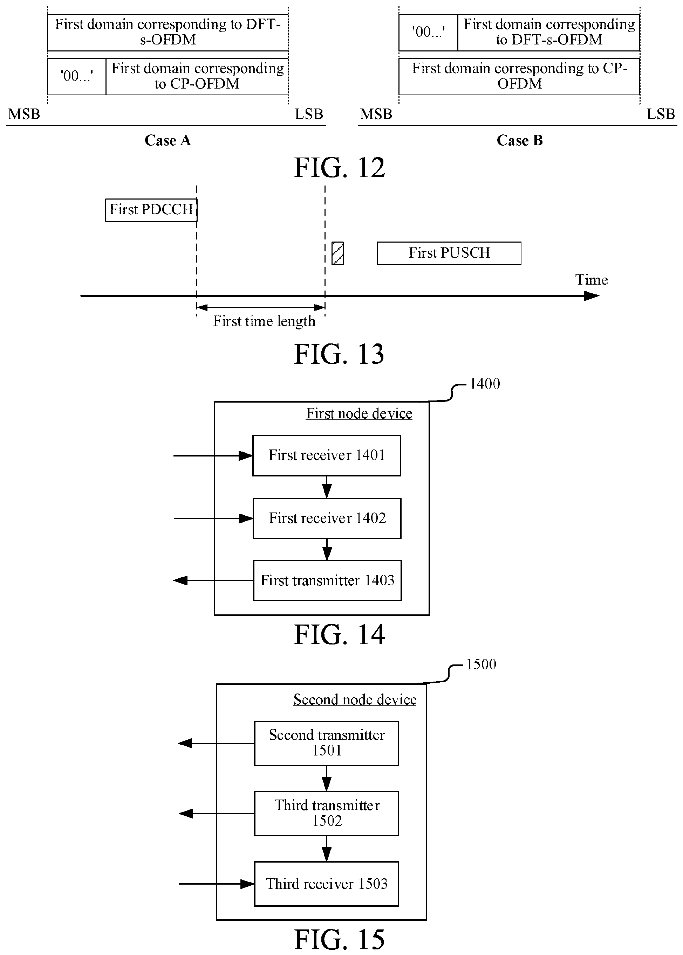

Embodiment 12 exemplarily shows a schematic diagram of an added bit according to an embodiment of the present application, as shown in FIG. 12. In FIG. 12, in case A and case B, the left is a direction of an MSB (most significant bit) of a first domain, and the right is a direction of an LSB (least significant bit) of the first domain. In case A, a size of a first domain corresponding to CP-OFDM is smaller than a size of a first domain corresponding to DFT-s-OFDM. In case B, the size of the first domain corresponding to the CP-OFDM is greater than the size of the first domain corresponding to the DFT-s-OFDM.

In Embodiment 12, the size of the first domain in the present application corresponding to the DFT-s-OFDM is not equal to the size of the first domain corresponding to the CP-OFDM. At least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

As an embodiment, the technical feature that "at least one most significant bit equal to "0" is added to the first domain having a smaller size between the first domain corresponding to the DFT-s-OFDM and the first domain corresponding to the CP-OFDM" includes the following meanings: When the size of the first domain corresponding to the DFT-s-OFDM is less than the size of the first domain corresponding to the CP-OFDM, at least one most significant bit equal to "0" is added to the first domain corresponding to the DFT-s-OFDM. When the size of the first domain corresponding to the DFT-s-OFDM is greater than the size of the first domain corresponding to the CP-OFDM, at least one most significant bit equal to "0" is added to the first domain corresponding to the CP-OFDM.

As an embodiment, the technical feature that "at least one most significant bit equal to "0" is added to the first domain having a smaller size between the first domain corresponding to the DFT-s-OFDM and the first domain corresponding to the CP-OFDM" includes the following meanings: At least one bit equal to "0" is added to a high-order bit among existing bits in the first domain having a smaller size between the size of the first domain corresponding to the DFT-s-OFDM and the size of the first domain corresponding to the CP-OFDM.

As an embodiment, the technical feature that "at least one most significant bit equal to "0" is added to the first domain having a smaller size between the first domain corresponding to the DFT-s-OFDM and the first domain corresponding to the CP-OFDM" includes the following meanings: M1 bits equal to "0" are added to the first domain having a smaller size between the first domain corresponding to the DFT-s-OFDM and the first domain corresponding to the CP-OFDM, to obtain a new first domain. The added M1 bits equal to "0" occupy highest M1 bits of the new first domain, where M1 is a positive integer.

As an embodiment, the technical feature "until the size of the first domain corresponding to the DFT-s-OFDM is equal to the size of the first domain corresponding to the CP-OFDM" includes the following meanings: Until the size of the first domain corresponding to the DFT-s-OFDM is equal to the size of the first domain corresponding to the CP-OFDM after bits are added to one of the first domains.

As an embodiment, the technical feature "until the size of the first domain corresponding to the DFT-s-OFDM is equal to the size of the first domain corresponding to the CP-OFDM" includes the following meanings: A quantity of most significant bits equal to "0" added to the first domain having a smaller size between the size of the first domain corresponding to the DFT-s-OFDM and the size of the first domain corresponding to the CP-OFDM is equal to an absolute value of a difference between the size of the first domain corresponding to the DFT-s-OFDM and the size of the first domain corresponding to the CP-OFDM.

As an embodiment, the technical feature "until the size of the first domain corresponding to the DFT-s-OFDM is equal to the size of the first domain corresponding to the CP-OFDM" includes the following meanings: After at least one most significant bit equal to "0" is added to the first domain having a smaller size between the size of the first domain corresponding to the DFT-s-OFDM and the size of the first domain corresponding to the CP-OFDM, the size of the first domain corresponding to the DFT-s-OFDM is equal to the size of the first domain corresponding to the CP-OFDM.

As an embodiment, the technical feature "until the size of the first domain corresponding to the DFT-s-OFDM is equal to the size of the first domain corresponding to the CP-OFDM" includes the following meanings: When the size of the first domain corresponding to the DFT-s-OFDM is greater than the size of the first domain corresponding to the CP-OFDM, a new size of the first domain corresponding to the CP-OFDM after at least one most significant bit equal to "0" is added is equal to the size of the first domain corresponding to the DFT-s-OFDM. When the size of the first domain corresponding to the DFT-s-OFDM is less than the size of the first domain corresponding to the CP-OFDM, a new size of the first domain corresponding to the DFT-s-OFDM after at least one most significant bit equal to "0" is added is equal to the size of the first domain corresponding to the CP-OFDM.

**Embodiment 13**

Embodiment 13 exemplarily shows a schematic diagram of a first time length according to an embodiment of the present application, as shown in FIG. 13. In FIG. 13, a horizontal axis represents, a rectangle filled with oblique lines represents a reference time domain symbol, two unfilled rectangles respectively represent a first PDCCH and a first PUSCH, and a time interval length between an expiration time of the first PDCCH and a start time of the reference time domain symbol is not less than a first time length.

In Embodiment 13, a DCI format used by the first PDCCH in the present application is used for scheduling the first PUSCH in the present application. An earliest time domain symbol occupied by the first PUSCH is not earlier than a reference time domain symbol, the reference time domain symbol being a next uplink symbol of which a start time is later than an expiration time of the first PDCCH by a first time length. The first time length is related to the target waveform in the present application.

As an embodiment, the technical feature that "a DCI format used by the first PDCCH is used for scheduling the first PUSCH" includes the following meanings: The DCI format used by the first PDCCH is used for explicitly or implicitly indicating at least one of a time domain resource occupied by the first PUSCH, a frequency domain resource occupied by the first PUSCH, an MSC used by the first PUSCH, a redundancy version (RV, redundancy version) of the first PUSCH, and an HARQ process to which the first PUSCH belongs.

As an embodiment, the technical feature that "a DCI format used by the first PDCCH is used for scheduling the first PUSCH" includes the following meanings: The DCI format used by the first PDCCH is used for dynamically scheduling the first PUSCH.

As an embodiment, the technical feature that "a DCI format used by the first PDCCH is used for scheduling the first PUSCH" includes the following meanings: The DCI format used by the first PDCCH is used for scheduling the first PUSCH by using a configured grant (configured grant).

As an embodiment, the technical feature that "a DCI format used by the first PDCCH is used for scheduling the first PUSCH" includes the following meanings: The DCI format used by the first PDCCH is used for dynamically scheduling the first PUSCH in a semi-persistent (semi-persistent) manner.

As an embodiment, the first PUSCH includes a demodulation reference signal (DMRS, Demodulation Reference).

As an embodiment, the first PUSCH does not include a demodulation reference signal (DMRS, Demodulation Reference).

As an embodiment, the earliest time domain symbol occupied by the first PUSCH is an earliest time domain symbol included in a time domain by allocation (allocation) of the first PUSCH.

As an embodiment, the earliest time domain symbol occupied by the first PUSCH is an earliest time domain symbol occupied by the first PUSCH including the DMRS.

As an embodiment, the earliest time domain symbol occupied by the first PUSCH is an earlier time domain symbol between an earliest time domain symbol occupied by the first PUSCH (not including the DMRS) and an earliest time domain symbol occupied by the DMRS of the first PUSCH.

As an embodiment, the earliest time domain symbol occupied by the first PUSCH is a time domain symbol, at an earliest start time, occupied by the first PUSCH.

As an embodiment, the earliest time domain symbol occupied by the first PUSCH is an earliest time domain symbol occupied by the first PUSCH, which is indicated by the DCI format used by the first PDCCH.

As an embodiment, the earliest time domain symbol occupied by the first PUSCH is an earliest time domain symbol in time domain resources defined by a slot offset value and a time domain resource assignment (TDRA, time domain resource assignment), which is indicated by the DCI format used by the first PDCCH.

As an embodiment, the earliest time domain symbol occupied by the first PUSCH is an earliest time domain symbol occupied by the first PUSCH including a timing advance (TA, timing advance) effect (effect).

As an embodiment, a sub-carrier spacing corresponding to the earliest time domain symbol occupied by the first PUSCH is equal to a sub-carrier spacing of a sub-carrier occupied by the first PUSCH in a frequency domain.

As an embodiment, a sub-carrier spacing corresponding to the earliest time domain symbol occupied by the first PUSCH is equal to a sub-carrier spacing corresponding to the reference time domain symbol.

As an embodiment, a start time of the earliest time domain symbol occupied by the first PUSCH is not earlier than a start time of the reference time domain symbol.

As an embodiment, an expiration time of the earliest time domain symbol occupied by the first PUSCH is not earlier than an expiration time of the reference time domain symbol.

As an embodiment, the earliest time domain symbol occupied by the first PUSCH is later than the reference time domain symbol.

As an embodiment, the earliest time domain symbol occupied by the first PUSCH is the same as the reference time domain symbol.

As an embodiment, an expiration time of the first PDCCH is a receiving end time of the first PDCCH.

As an embodiment, an expiration time of the first PDCCH is a receiving expiration time of a latest time domain symbol occupied by the first PDCCH in a time domain.

As an embodiment, the technical feature that "the reference time domain symbol is a next uplink symbol of which a start time is later than an expiration time of the first PDCCH by a first time length" includes the following meanings: The reference time domain symbol is a next uplink symbol of which a start time of a cyclic prefix included is later than the expiration time of the first PDCCH by the first time length.

As an embodiment, the technical feature that "the reference time domain symbol is a next uplink symbol of which a start time is later than an expiration time of the first PDCCH by a first time length" includes the following meanings: The reference time domain symbol is a next uplink symbol of which a start time of a cyclic prefix included in a case that a TA effect is included is later than the expiration time of the first PDCCH by the first time length.

As an embodiment, the technical feature that "the reference time domain symbol is a next uplink symbol of which a start time is later than an expiration time of the first PDCCH by a first time length" includes the following meanings: The reference time domain symbol is an earliest uplink symbol in which a time interval between the start time of the cyclic prefix included and the expiration time of the first PDCCH is not less than the first time length.

As an embodiment, a unit of the first time length is second or millisecond.

As an embodiment, the first time length is represented by a quantity of $T_c$, where $T_c = 1/(480 \cdot 10^3 \cdot 4096)$ seconds.

As an embodiment, the first time length is a PUSCH preparation procedure time (preparation procedure time).

As an embodiment, the first time length is $T_{proc,2}$.

As an embodiment, the technical feature that "the first time length is related to the target waveform" includes the following meanings: The target waveform is used for determining the first time length.

As an embodiment, the technical feature that "the first time length is related to the target waveform" includes the following meanings: The target waveform is used for determining the first time length according to a correspondence or a mapping relationship.

As an embodiment, the technical feature that "the first time length is related to the target waveform" includes the following meanings: The target waveform is used for determining the first time length according to a conditional relationship or a table relationship.

As an embodiment, the technical feature that "the first time length is related to the target waveform" includes the following meanings: The target waveform is used as a parameter for calculating the first time length according to a function.

As an embodiment, the technical feature that "the first time length is related to the target waveform" includes the following meanings: The first time length changes as the target waveform changes.

As an embodiment, the technical feature that "the first time length is related to the target waveform" includes the following meanings: Whether the target waveform is DFT-s-OFDM or CP-OFDM affects the first time length.

As an embodiment, the technical feature that "the first time length is related to the target waveform" includes the following meanings: Whether the target waveform is the same as a waveform used for uplink transmission earlier than the first PUSCH is used for determining the first time length.

As an embodiment, the technical feature that "the first time length is related to the target waveform" includes the following meanings: Whether the target waveform is the same as a waveform used for uplink transmission immediately preceding the first PUSCH is used for determining the first time length.

As an embodiment, the technical feature that "the first time length is related to the target waveform" includes the following meanings: A target parameter is a parameter for calculating the first time length, and the target waveform is used for determining the target parameter. As an auxiliary embodiment of the foregoing embodiment, the target parameter is $d_{2,2}$ in a calculation formula of $T_{proc,2}$. As an auxiliary embodiment of the foregoing embodiment, the target parameter is $d_2$ in a calculation formula of $T_{proc,2}$. As an auxiliary embodiment of the foregoing embodiment, the target parameter is $T_{switch}$ in a calculation formula of $T_{proc,2}$. As an auxiliary embodiment of the foregoing embodiment, the target parameter is a parameter other than $N_2$, $d_{2,1}$, $T_{ext}$, $T_{switch}$, or $d_{2,2}$ in a calculation formula of $T_{proc,2}$.

As an embodiment, the technical feature that "the first time length is related to the target waveform" includes the following meanings: A target parameter is a parameter for calculating the first time length. Whether the target waveform is the same as a waveform used for uplink transmission immediately preceding the first PUSCH is used for determining the target parameter. As an auxiliary embodiment of the foregoing embodiment, the target parameter is $d_{2,2}$ in a calculation formula of $T_{proc,2}$. As an auxiliary embodiment of the foregoing embodiment, the target parameter is $d_2$ in a calculation formula of $T_{proc,2}$. As an auxiliary embodiment of the foregoing embodiment, the target parameter is $T_{switch}$ in a calculation formula of $T_{proc,2}$. As an auxiliary embodiment of the foregoing embodiment, the target parameter is a parameter other than $N_2$, $d_{2,1}$, $T_{ext}$, $T_{switch}$, or $d_{2,2}$ in a calculation formula of $T_{proc,2}$.

As an embodiment, the technical feature that "the first time length is related to the target waveform" is implemented by satisfying the following formula:

$$T_{proc,2} = max\left((N_2 + d_{2,1} + d_2)(2048 + 144) \cdot \kappa 2^{-\mu} \cdot T_C + T_{ext} + T_{switch}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is a value related to the target waveform, $\kappa$ is equal to 64, $\mu$ is equal to a sub-carrier spacing index, $T_c = 1/(480 \cdot 10^3 \cdot 4096)$ seconds, and $T_{switch}$ represents duration of an uplink sending conversion interval.

As an embodiment, the technical feature that "the first time length is related to the target waveform" is implemented by satisfying the following formula:

$$T_{proc,2} = max\left((N_2 + d_{2,1} + d_2)(2048 + 144) \cdot \kappa 2^{-\mu} \cdot T_C + T_{ext} + T_{switch}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $\kappa$ is equal to 64, $\mu$ is equal to a sub-carrier spacing index, $T_c = 1/(480 \cdot 10^3 \cdot 4096)$ seconds, and $T_{switch}$ represents duration of an uplink sending conversion interval. When the target waveform is the same as a waveform of an uplink transmission preceding the first PUSCH, $d_2$ is equal to 0. When the target waveform is different from a waveform of an uplink transmission preceding the first PUSCH, $d_2$ is equal to a value that is predefined or reported by the first node device.

As an embodiment, the technical feature that "the first time length is related to the target waveform" is implemented by satisfying the following formula:

$$T_{proc,2} = max\left((N_2 + d_{2,1} + d_2)(2048 + 144) \cdot \kappa 2^{-\mu} \cdot T_C + T_{ext} + T_{switch} + T_{waveform}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 \cdot 4096)$ seconds, $T_{switch}$ represents duration of an uplink sending conversion interval, and $T_{waveform}$ represents a value related to the target waveform.

As an embodiment, the technical feature that "the first time length is related to the target waveform" is implemented by satisfying the following formula:

$$T_{proc,2} = max\left((N_2 + d_{2,1} + d_2)(2048 + 144) \cdot \kappa 2^{-\mu} \cdot T_C + T_{ext} + T_{switch} + T_{waveform}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 \cdot 4096)$ seconds, and $T_{switch}$ represents duration of an uplink sending conversion interval. When the target waveform is the same as a waveform of an uplink transmission preceding the first PUSCH, $T_{waveform}$ is equal to 0. When the target waveform is different from a waveform of an uplink transmission preceding the first PUSCH, $T_{waveform}$ is equal to a value that is predefined or reported by the first node device.

As an embodiment, the technical feature that "the first time length is related to the target waveform" is implemented by satisfying the following formula:

$$T_{proc,2} = max\left((N_2 + d_{2,1} + d_2 + d_3)(2048 + 144) \cdot \kappa 2^{-\mu} \cdot T_C + T_{ext} + T_{switch}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 \cdot 4096)$ seconds, $T_{switch}$ represents duration of an uplink sending conversion interval, and $d_3$ is a value related to the target waveform.

As an embodiment, the technical feature that "the first time length is related to the target waveform" is implemented by satisfying the following formula:

$$T_{proc,2} = max\left(\left(N_2 + d_{2,1} + d_2 + d_3\right)(2048 + 144) \cdot \kappa 2^{-\mu} \cdot T_C + T_{ext} + T_{switch}, d_{2,2}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 \cdot 4096)$ seconds, and $T_{switch}$ represents duration of an uplink sending conversion interval. When the target waveform is the same as a waveform of an uplink transmission preceding the first PUSCH, $d_3$ is equal to 0. When the target waveform is different from a waveform of an uplink transmission preceding the first PUSCH, $d_3$ is equal to a value that is predefined or reported by the first node device.

As an embodiment, the technical feature that "the first time length is related to the target waveform" is implemented by satisfying the following formula:

$$T_{proc,2} = max\left(\left(N_2 + d_{2,1} + d_2\right)(2048 + 144) \cdot \kappa 2^{-\mu} \cdot T_C + T_{ext} + T_{switch}, d_{2,2} + d_{2,3}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 - 4096)$ seconds, and $T_{switch}$ represents duration of an uplink sending conversion interval. $d_{2,3}$ is a value related to the target waveform.

As an embodiment, the technical feature that "the first time length is related to the target waveform" is implemented by satisfying the following formula:

$$T_{proc,2} = max\left(\left(N_2 + d_{2,1} + d_2\right)(2048 + 144) \cdot \kappa 2^{-\mu} \cdot T_C + T_{ext} + T_{switch}, d_{2,2} + d_{2,3}\right)$$

where $T_{proc,2}$ represents the first time length, $N_2$ is a value related to the sub-carrier spacing, $T_{ext}$ is a value related to whether a spectrum resource to which the first PUSCH belongs in a frequency domain is an unlicensed spectrum, $d_{2,1}$ is a value related to whether a starting time domain symbol in a time domain in allocation of the first PUSCH includes a DMRS, $d_{2,2}$ is equal to a BWP conversion time when BWP conversion occurs, and otherwise, is equal to 0, $d_2$ is equal to a value reported by the first node device or equal to 0, $\kappa$ is equal to 64, $\mu$ is equal to a sub-carrier spacing index, $T_c = 1/(480 \cdot 10^3 \cdot 4096)$ seconds, and $T_{switch}$ represents duration of an uplink sending conversion interval. When the target waveform is the same as a waveform of an uplink transmission preceding the first PUSCH, $d_{2,3}$ is equal to 0. When the target waveform is different from a waveform of an uplink transmission preceding the first PUSCH, $d_{2,3}$ is equal to a value that is predefined or reported by the first node device.

## Embodiment 14

Embodiment 14 exemplarily shows a structural block diagram of a processing apparatus in a first node device according to an embodiment, as shown in FIG. 14. In FIG. 14, a first node device processing apparatus 1400 includes a first receiver 1401, a second receiver 1402, and a first transmitter 1403. The first receiver 1401 includes the transmitter/receiver 456 (including the antenna 460), the receive processor 452, and the controller/processor 490 in FIG. 4 of the present application. The second receiver 1402 includes the transmitter/receiver 456 (including the antenna 460) and the receive processor 452 in FIG. 4 of the present application. The first transmitter 1403 includes the transmitter/receiver 456 (including the antenna 460), the transmit processor 455, and the controller/processor 490 in FIG. 4 of the present application.

In Embodiment 14, the first receiver 1401 receives a first information block. The second receiver 1402 receives a first PDCCH, where a DCI format used by the first PDCCH at least includes a first domain. The first transmitter 1403 sends a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the second information block is a domain, a value of the second information block is an enumerated value, and the target waveform is related to whether the second information block is configured.

As an embodiment, the first receiver 1401 receives a third information block. The first information block is used for indicating a first reference waveform, the third information block is used for indicating a second reference waveform, the first reference waveform is one of the DFT-s-OFDM and the CP-OFDM, and the second reference waveform is one of the DFT-s-OFDM and the CP-OFDM. When the second information block is not configured, the target waveform is the second reference waveform. When the second information block is configured and the DCI format used by the first PDCCH does not include the second domain, the target waveform is the first reference waveform.

As an embodiment, a transmitted power of the first PUSCH is equal to a smaller value between a first upper limit value and a first power value. A first parameter value is used for determining the first upper limit value. A second parameter value is used for determining the first power value. The first parameter value is related to the target waveform, and the second parameter value is related to the target waveform.

As an embodiment, a size of the first domain included in the DCI format used by the first PDCCH is equal to a larger size between a size of the first domain corresponding to the DFT-s-OFDM and a size of the first domain corresponding to the CP-OFDM.

As an embodiment, the size of the first domain corresponding to the DFT-s-OFDM is not equal to the size of the first domain corresponding to the CP-OFDM. At least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

As an embodiment, the DCI format used by the first PDCCH is used for scheduling the first PUSCH. An earliest time domain symbol occupied by the first PUSCH is not earlier than a reference time domain symbol, the reference time domain symbol being a next uplink symbol of which a start time is later than an expiration time of the first PDCCH by a first time length. The first time length is related to the target waveform.

## Embodiment 15

Embodiment 15 exemplarily shows a structural block diagram of a processing apparatus in a second node device according to an embodiment, as shown in FIG. 15. In FIG. 15, a second node device processing apparatus 1500 includes a second transmitter 1501, a third transmitter 1502, and a third receiver 1503. The second transmitter 1501 includes the transmitter/receiver 416 (including the antenna 460), the transmit processor 415, and the controller/processor 440 in FIG. 4 of the present application. The third transmitter 1502 includes the transmitter/receiver 416 (including the antenna 460) and the transmit processor 415 in FIG. 4 of the present application. The third receiver 1503 includes the transmitter/receiver 416 (including the antenna 460), the receive processor 412, and the controller/processor 440 in FIG. 4 of the present application.

In Embodiment 15, the second transmitter 1501 sends a first information block. The third transmitter 1502 sends a first PDCCH, where a DCI format used by the first PDCCH at least includes a first domain. The third receiver 1503 receives a first PUSCH, where a waveform used by the first PUSCH is a target waveform, and the target waveform is one of DFT-s-OFDM and CP-OFDM. The first domain is a domain related to a waveform, a second domain is a domain different from the first domain, whether the DCI format used by the first PDCCH includes the second domain depends on a second information block, and the second information block is different from the first information block. When the DCI format used by the first PDCCH includes the second domain, the second domain included in the DCI format used by the first PDCCH is used for determining the target waveform from the DFT-s-OFDM and the CP-OFDM. When the DCI format used by the first PDCCH does not include the second domain, at least the first information block between the first information block and the second information block is used for determining the target waveform from the DFT-s-OFDM and the CP-OFDM.

As an embodiment, the second information block is a domain, a value of the second information block is an enumerated value, and the target waveform is related to whether the second information block is configured.

As an embodiment, the second transmitter 1501 sends a third information block. The first information block is used for indicating a first reference waveform, the third information block is used for indicating a second reference waveform, the first reference waveform is one of the DFT-s-OFDM and the CP-OFDM, and the second reference waveform is one of the DFT-s-OFDM and the CP-OFDM. When the second information block is not configured, the target waveform is the second reference waveform. When the second information block is configured and the DCI format used by the first PDCCH does not include the second domain, the target waveform is the first reference waveform.

As an embodiment, a transmitted power of the first PUSCH is equal to a smaller value between a first upper limit value and a first power value. A first parameter value is used for determining the first upper limit value. A second parameter value is used for determining the first power value. The first parameter value is related to the target waveform, and the second parameter value is related to the target waveform.

As an embodiment, a size of the first domain included in the DCI format used by the first PDCCH is equal to a larger size between a size of the first domain corresponding to the DFT-s-OFDM and a size of the first domain corresponding to the CP-OFDM.

As an embodiment, the size of the first domain corresponding to the DFT-s-OFDM is not equal to the size of the first domain corresponding to the CP-OFDM. At least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

As an embodiment, the DCI format used by the first PDCCH is used for scheduling the first PUSCH. An earliest time domain symbol occupied by the first PUSCH is not earlier than a reference time domain symbol, the reference time domain symbol being a next uplink symbol of which a start time is later than an expiration time of the first PDCCH by a first time length. The first time length is related to the target waveform.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the modules and units in the foregoing embodiments may be implemented in a form of hardware, or may be implemented in a form of a software functional module. The present application is not limited to a combination of software and hardware in any particular form. The first node device or the second node device or the UE or the terminal in the present application includes, but is not limited to, a wireless communication device such as a mobile phone, a tablet, a laptop, a network adapter, a low-power device, an eMTC device, an NB-IoT device, an in-vehicle communication device, an aircraft, an airplane, an unmanned aerial vehicle, or a remote control airplane. The base station device or the base station or the network side device in the present application includes, but is not limited to, a wireless communication device such as a macrocellular base station, a microcellular base station, a home base station, a relay base station, an eNB, a gNB, a transmission and reception point (TRP), a relay satellite, a satellite base station, or an aerial base station.

A person skilled in the art should understand that the present disclosure may be implemented in other specified forms without departing from the core or basic characteristics thereof. Therefore, the currently disclosed embodiments should be considered as descriptive rather than restrictive in any way. The scope of the present disclosure is determined by the appended claims rather than the foregoing description, and all modifications within the equivalent meanings and regions thereof are considered to be included therein.

**Claims**

1. A first node device used in wireless communication, comprising:

   a first receiver, configured to receive a first information block;
   a second receiver, configured to receive a first PDCCH, a DCI format used by the first PDCCH at least comprising a first domain; and
   a first transmitter, configured to send a first PUSCH, a waveform used by the first PUSCH being a target waveform, and the target waveform being one of DFT-s-OFDM and CP-OFDM,
   wherein the first domain is a domain related to a waveform, a second domain is a domain different from the first domain, whether the DCI format used by the first PDCCH comprises the second domain depends on a second information block, and the second information block is different from the first information block; when the DCI format used by the first PDCCH comprises the second domain, the second domain comprised in the DCI format used by the first PDCCH is used for determining the target waveform from the DFT-s-OFDM and the CP-OFDM; and when the DCI format used by the first PDCCH does not comprise the second domain, at least the first information block between the first information block and the second information block is used for determining the target waveform from the DFT-s-OFDM and the CP-OFDM.

2. The first node device according to claim 1, wherein the second information block is a domain, a value of the second information block is an enumerated value, and the target waveform is related to whether the second information block is configured.

3. The first node device according to claim 1 or 2, wherein the first receiver receives a third information block, wherein the first information block is used for indicating a first reference waveform, the third information block is used for indicating a second reference waveform, the first reference waveform is one of the DFT-s-OFDM and the CP-OFDM, and the second reference waveform is one of the DFT-s-OFDM and the CP-OFDM; when the second information block is not configured, the target waveform is the second reference waveform; and when the second information block is configured and the DCI format used by the first PDCCH does not comprise the second domain, the target waveform is the first reference waveform.

4. The first node device according to any one of claims 1 to 3, wherein a transmitted power of the first PUSCH is equal to a smaller value between a first upper limit value and a first power value, a first parameter value is used for determining the first upper limit value, and a second parameter value is used for determining the first power value; and the first parameter value is related to the target waveform, and the second parameter value is related to the target waveform.

5. The first node device according to any one of claims 1 to 4, wherein a size of the first domain comprised in the DCI format used by the first PDCCH is equal to a larger size between a size of the first domain corresponding to the DFT-s-OFDM and a size of the first domain corresponding to the CP-OFDM.

6. The first node device according to any one of claims 1 to 5, wherein the size of the first domain corresponding to the DFT-s-OFDM is not equal to the size of the first domain corresponding to the CP-OFDM; and at least one most significant bit equal to "0" is added to the first domain having a smaller size between the first domain corresponding to the DFT-s-OFDM and the first domain corresponding to the CP-OFDM, until the size of the first domain corresponding to the DFT-s-OFDM is equal to the size of the first domain corresponding to the CP-OFDM.

7. The first node device according to any one of claims 1 to 6, wherein the DCI format used by the first PDCCH is used for scheduling the first PUSCH; an earliest time domain symbol occupied by the first PUSCH is not earlier than a reference time domain symbol, the reference time domain symbol being a next uplink symbol of which a start time is later than an expiration time of the first PDCCH by a first time length; and the first time length is related to the target waveform.

8. A second node device used in wireless communication, comprising:

   a second transmitter, configured to send a first information block;
   a third transmitter, configured to send a first PDCCH, a DCI format used by the first PDCCH at least comprising a first domain; and
   a third receiver, configured to receive a first PUSCH, a waveform used by the first PUSCH being a target waveform, and the target waveform being one of DFT-s-OFDM and CP-OFDM,
   wherein the first domain is a domain related to a waveform, a second domain is a domain different from the first domain, whether the DCI format used by the first PDCCH comprises the second domain depends on a second information block, and the second information block is different from the first information block; when the DCI format used by the first PDCCH comprises the second domain, the second domain comprised in the DCI format used by the first PDCCH is used for determining the target waveform from the DFT-s-OFDM and the CP-OFDM; and when the DCI format used by the first PDCCH does not comprise the second domain, at least the first information block between the first information block and the second information block is used for determining the target waveform from the DFT-s-OFDM and the CP-OFDM.

9. A method in a first node used in wireless communication, comprising:

   receiving a first information block;
   receiving a first PDCCH, a DCI format used by the first PDCCH at least comprising a first domain; and
   sending a first PUSCH, a waveform used by the first PUSCH being a target waveform, and the target waveform being one of DFT-s-OFDM and CP-OFDM,

wherein the first domain is a domain related to a waveform, a second domain is a domain different from the first domain, whether the DCI format used by the first PDCCH comprises the second domain depends on a second information block, and the second information block is different from the first information block; when the DCI format used by the first PDCCH comprises the second domain, the second domain comprised in the DCI format used by the first PDCCH is used for determining the target waveform from the DFT-s-OFDM and the CP-OFDM; and when the DCI format used by the first PDCCH does not comprise the second domain, at least the first information block between the first information block and the second information block is used for determining the target waveform from the DFT-s-OFDM and the CP-OFDM.

10. A method in a second node used in wireless communication, comprising:

sending a first information block;
sending a first PDCCH, a DCI format used by the first PDCCH at least comprising a first domain; and
receiving a first PUSCH, a waveform used by the first PUSCH being a target waveform, and the target waveform being one of DFT-s-OFDM and CP-OFDM,

wherein the first domain is a domain related to a waveform, a second domain is a domain different from the first domain, whether the DCI format used by the first PDCCH comprises the second domain depends on a second information block, and the second information block is different from the first information block; when the DCI format used by the first PDCCH comprises the second domain, the second domain comprised in the DCI format used by the first PDCCH is used for determining the target waveform from the DFT-s-OFDM and the CP-OFDM; and when the DCI format used by the first PDCCH does not comprise the second domain, at least the first information block between the first information block and the second information block is used for determining the target waveform from the DFT-s-OFDM and the CP-OFDM.

100 ↘

| Receive a first information block | — 101 |
| Receive a first PDCCH | — 102 |
| Send a first PUSCH | — 103 |

## FIG. 1

**5GS/EPS 200**

HSS/ UDM — 220

NR-RAN/ EUTRAN **202**

MME/ AMF/SMF — 211 ↔ Another MME/ AMF/SMF — 214

UE — 201

NR/Evolved nodeB — 203

Another NR/Evolved nodeB — 204

UE — 241

S-GW/ UPF — 212 ↔ P-GW/ UPF — 213

Internet service — 230

**5GC/EPC 210**

## FIG. 2

**Control plane 300**

305 —

L3 — RRC — 306

L2 — PDCP — 304

RLC — 303

MAC — 302

L1 — PHY — 301

**User plane 350**

355 —

L2 — SDAP — 356

PDCP — 354

RLC — 353

MAC — 352

L1 — PHY — 351

## FIG. 3

400 ↘

420 — 460

416 — 456

415 Transmit processor

Transmitter Receiver — 416

Transmitter Receiver — 456

455 Transmit processor

440 Controller/ Processor

490 Controller/ Processor

420 — 460

430 Memory

412 Receive processor

Transmitter Receiver — 416

Transmitter Receiver — 456

452 Receive processor

480 Memory

## FIG. 4

N500. Second node

S501. Send a first information block

First information block →

S551. Receive a first information block ⟩ Optionally

S502. Send a third information block

Third information block →

S552. Receive a third information block

S503. Send a first PDCCH

First PDCCH →

S553. Receive a first PDCCH

S554. Send a first PUSCH

← First PUSCH

S504. Receive a first PUSCH

N550. First node

End

End

## FIG. 5

N600. Second node

S601. Send a first information block

First information block →

S651. Receive a first information block ⟩ Optionally

S602. Send a third information block

Third information block →

S652. Receive a third information block

S603. Send a second information block

Second information block →

S653. Receive a second information block

S604. Send a first PDCCH

First PDCCH →

S654. Receive a first PDCCH

S655. Send a first PUSCH

← First PUSCH

S605. Receive a first PUSCH

N650. First node

End

End

## FIG. 6

N700. Second node

N750. First node

S701. Send a first information block

First information block

S751. Receive a first information block

S752. Send a second information block

Second information block

S702. Receive a second information block

Optionally

S703. Send a third information block

Third information block

S753. Receive a third information block

S704. Send a first PDCCH

First PDCCH

S754. Receive a first PDCCH

S755. Send a first PUSCH

First PUSCH

S705. Receive a first PUSCH

End

End

## FIG. 7

| Second information block | ENUMERATED {enabled} |
|---|---|

**Case A**

| Second information block | ENUMERATED {enabled, disabled} |
|---|---|

**Case B**

| Second information block | ENUMERATED {supported} |
|---|---|

**Case C**

| Second information block | ENUMERATED {supported, notsupported} |
|---|---|

**Case D**

## FIG. 8

901 Start

902 Is a second information block configured? — No → The target waveform is a second reference waveform 905

Yes

903 Does a first PDCCH include a second domain? — No → The target waveform is a first reference waveform 906

Yes

904 The second domain indicates a target waveform

FIG. 9

Power

Transmitted power of first PUSCH

First upper limit value | First power value

**Case A**

Power

Transmitted power of first PUSCH

First upper limit value | First power value

**Case B**

FIG. 10

Size of a first domain included in a DCI format adopted by a first PDCCH

Size of a first domain corresponding to CP-OFDM | Size of a first domain corresponding to DFT-s-OFDM

**Case A**

Size of a first domain included in a DCI format adopted by a first PDCCH

Size of a first domain corresponding to CP-OFDM | Size of a first domain corresponding to DFT-s-OFDM

**Case B**

FIG. 11

| First domain corresponding to DFT-s-OFDM | |
|---|---|
| '00...' | First domain corresponding to CP-OFDM |

MSB ————————————————————— LSB

**Case A**

| '00...' | First domain corresponding to DFT-s-OFDM |
|---|---|
| First domain corresponding to CP-OFDM | |

MSB ————————————————————— LSB

**Case B**

# FIG. 12

First PDCCH

First PUSCH

Time

First time length

# FIG. 13

1400

First node device

First receiver 1401

First receiver 1402

First transmitter 1403

# FIG. 14

1500

Second node device

Second transmitter 1501

Third transmitter 1502

Third receiver 1503

# FIG. 15

## INTERNATIONAL SEARCH REPORT

| | | International application No. |
|---|---|---|
| | | **PCT/CN2023/112783** |

**A.    CLASSIFICATION OF SUBJECT MATTER**

H04W 16/10(2009.01)i

According to International Patent Classification (IPC) or to both national classification and IPC

**B.    FIELDS SEARCHED**

Minimum documentation searched (classification system followed by classification symbols)

IPC：H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 下行控制信息, 波形, 域, 信息单元, 变换, 转换, 预编码, 关, 开, 确定, 选择, DCI, waveform, disable, enable, off, on, IE, PDCCH, PUSCH, transform, precoding, CP-OFDM, DFT-s-OFDM

**C.    DOCUMENTS CONSIDERED TO BE RELEVANT**

| Category* | Citation of document, with indication, where appropriate, of the relevant passages | Relevant to claim No. |
|---|---|---|
| X | CN 108282433 A (HUAWEI TECHNOLOGIES CO., LTD.) 13 July 2018 (2018-07-13) description, paragraphs [0087]-[0249], and figures 1-10 | 1-10 |
| A | CN 113767684 A (SAMSUNG ELECTRONICS CO., LTD.) 07 December 2021 (2021-12-07) entire document | 1-10 |
| A | CN 111316729 A (SHARP CORP. et al.) 19 June 2020 (2020-06-19) entire document | 1-10 |
| A | CN 114503736 A (SAMSUNG ELECTRONICS CO., LTD.) 13 May 2022 (2022-05-13) entire document | 1-10 |
| A | WO 2021260659 A1 (LENOVO SINGAPORE PTE LTD.) 30 December 2021 (2021-12-30) entire document | 1-10 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 November 2023** | **21 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112783**

| Patent document cited in search report | | | Publication date (day/month/year) | Patent family member(s) | | | Publication date (day/month/year) |
|---|---|---|---|---|---|---|---|
| CN | 108282433 | A | 13 July 2018 | EP | 3557829 | A1 | 23 October 2019 |
| | | | | EP | 3557829 | A4 | 08 January 2020 |
| | | | | EP | 3557829 | B1 | 11 October 2023 |
| | | | | WO | 2018127157 | A1 | 12 July 2018 |
| | | | | US | 2019327685 | A1 | 24 October 2019 |
| CN | 113767684 | A | 07 December 2021 | EP | 3903533 | A1 | 03 November 2021 |
| | | | | EP | 3903533 | A4 | 09 March 2022 |
| | | | | WO | 2020204547 | A1 | 08 October 2020 |
| | | | | US | 2020314837 | A1 | 01 October 2020 |
| | | | | US | 11510185 | B2 | 22 November 2022 |
| | | | | US | 2023090192 | A1 | 23 March 2023 |
| | | | | US | 11737103 | B2 | 22 August 2023 |
| CN | 111316729 | A | 19 June 2020 | EP | 3691379 | A1 | 05 August 2020 |
| | | | | EP | 3691379 | A4 | 16 June 2021 |
| | | | | BR | 112020005435 | A2 | 24 September 2020 |
| | | | | WO | 2019065595 | A1 | 04 April 2019 |
| | | | | JP | 2019062344 | A | 18 April 2019 |
| | | | | JP | 7100969 | B2 | 14 July 2022 |
| | | | | US | 2020259612 | A1 | 13 August 2020 |
| | | | | US | 11411697 | B2 | 09 August 2022 |
| CN | 114503736 | A | 13 May 2022 | EP | 3967094 | A1 | 16 March 2022 |
| | | | | EP | 3967094 | A4 | 20 July 2022 |
| | | | | US | 2021105774 | A1 | 08 April 2021 |
| | | | | WO | 2021066563 | A1 | 08 April 2021 |
| | | | | KR | 20210039874 | A | 12 April 2021 |
| WO | 2021260659 | A1 | 30 December 2021 | US | 2023283436 | A1 | 07 September 2023 |
| | | | | EP | 4173420 | A1 | 03 May 2023 |

Form PCT/ISA/210 (patent family annex) (July 2022)